# EUROPÄISCHE PATENTANMELDUNG

(11) **EP 1 073 132 A1**
(43) Veröffentlichungstag der Anmeldung: **31.01.2001**
(21) Anmeldenummer: 00105202.6
(22) Anmeldetag: 13.03.2000
(51) Int. Cl.: H01M 2/34, A61N 1/378, H04R 25/00, H01M 2/02

(54) **Elektrochemische Sekundärzelle**

(30) Priorität: 30.07.1999 DE 19936063
(71) Anmelder: IMPLEX Aktiengesellschaft Hearing Technology, 85737 Ismaning (DE)
(72) Erfinder: Leysieffer, Hans, Dr.-Ing. (Dipl.-Ing.), 82024 Taufkirchen (DE); Fiedler, Dirk A., Dr., 85737 Ismaning (DE); Müller, Dieter, Dr., 86405 Meitingen (DE)
(74) Vertreter: Schwan, Gerhard, Dipl.-Ing.

(57) **Zusammenfassung**

Gegenstand der Erfindung ist eine elektrochemische Sekundärzelle mit mindestens jeweils einer ein aktives Material umfassenden positiven (2) und einer negativen (4) Elektrode, die unmittelbar in einem Gehäuse aufgenommen sind, welches zumindest ein Detektororgan (62) aufweist oder mit einem solchen in Wirkverbindung steht, wobei das Detektororgan (62) ausgelegt oder einstellbar ist, einen vorbestimmten unzulässigen Betriebszustand der elektrochemischen Sekundärzelle zu erfassen und bei unzulässigem Betriebszustand der elektrochemischen Sekundärzelle mindestens ein Schaltorgan (86) zu betätigen, welches ein Nachladen und/oder Entladen der elektrochemischen Sekundärzelle verhindert.

Indem das Gehäuse als hermetisch dichtes Schutzgehäuse (54) ausgebildet ist, welches Teil einer implantierbaren medizinischen Vorrichtung ist, kann ― bei gleichzeitig weitestgehender Reduzierung sämtlicher Abmessungen ― eine Kontamination umliegenden Gewebes mit toxischen Substanzen sowie eine Gefährdung des Implantatträgers durch eine Fehlfunktion der elektrochemischen Sekundärzelle unter allen Betriebsbedingungen ausgeschlossen werden. Unter hermetischer Dichtheit wird vorliegend vorzugsweise hermetische Gasdichtheit nach Mil-Std 883 D verstanden.

## Beschreibung

Die Erfindung betrifft eine elektrochemische Sekundärzelle mit mindestens jeweils einer ein aktives Material umfassenden positiven und einer negativen Elektrode, die unmittelbar in einem Gehäuse aufgenommen sind, welches zumindest ein Detektororgan aufweist oder mit einem solchen in Wirkverbindung steht, wobei das Detektororgan ausgelegt oder einstellbar ist, einen vorbestimmten unzulässigen Betriebszustand der elektrochemischen Sekundärzelle zu erfassen und bei unzulässigem Betriebszustand der elektrochemischen Sekundärzelle mindestens ein Schaltorgan zu betätigen, welches ein Nachladen und/oder Entladen der elektrochemischen Sekundärzelle verhindert.

Bei elektrochemischen Sekundärzellen kann es beispielsweise bei übermäßigem Laden oder beim Entladen mit einem unzulässig hohen Strom zu einem Druckanstieg im Inneren des Gehäuses der elektrochemischen Sekundärzelle kommen, der zu einer Verformung des Gehäuses führt, die so groß werden kann, dass Chemikalien insbesondere in gasförmiger oder flüssiger Form in großen Mengen aus dem Gehäuse austreten. Zur Erhöhung der Betriebssicherheit von elektrochemischen Sekundärzellen sind verschiedene Schutzmechanismen vorgeschlagen worden.

So offenbart die Druckschrift EP-A-0 470 726 eine elektrochemische Sekundärzelle mit den Merkmalen des Oberbegriffs des Anspruchs 1, welche ein zylindrisches Gehäuse mit einer Druckmembran als Detektororgan besitzt. Das Gehäuse nimmt die Elektroden der elektrochemischen Sekundärzelle unmittelbar auf, wobei die Druckmembran als Teil des Gehäuses stirnseitig im Gehäuse integriert ist und sich bei Druckanstieg im Inneren des Gehäuses wölbt, so dass ein zentrisch mit der Druckmembran verbundenes tellerförmiges Schaltorgan einen elektrischen Kontakt zwischen einer Elektrode und einem an der Außenseite des Gehäuses vorgesehenen Anschlusskontakt reversibel oder irreversibel unterbricht, sobald der Druck im Inneren des Gehäuses einen vorbestimmten Wert erreicht.

Aus der EP-A-0 322 112, EP-A-0 360 395 und der EP-A-0 370 634 ist es bekannt, elektrochemische Zellen mit einem Schaltorgan zu versehen, das bei Überschreiten einer bestimmten noch tolerierten Grenzverformung des Gehäuses einen elektrischen Anschlusskontakt von einer zugehörigen elektrochemisch aktiven Elektrode vorzugsweise irreversibel trennt, um eine weitere Verformung des Gehäuses zu verhindern. Das Gehäuse nimmt die Elektroden unmittelbar auf und umfasst einen elektrisch leitfähigen stirnseitig geschlossenen zylindrischen Gehäuseabschnitt, der mit einer Elektrode kontaktiert ist, wobei an der Stirnseite das tellerförmige Schaltorgan zentrisch mittels eines elektrisch isolierenden Klebstoffes von außen angebracht ist. Das elektrisch ebenfalls leitfähige Schaltorgan bildet in seiner Grundstellung über seinen Außenrand eine elektrische Verbindung zwischen dem Gehäuseabschnitt und dem im Zentrum des Schaltorgans angeordneten nach außen vorstehenden elektrischen Anschlusskontakt. Bei Druckzunahme im Inneren des Gehäuses wölbt sich die als Detektororgan wirkende Stirnseite des Gehäuseabschnitts nach außen, wodurch der Kontakt zwischen dem Gehäuseabschnitt und dem Außenrand des Schaltorgans und somit zwischen der einen Elektrode und dem Anschlusskontakt unterbrochen wird. Als typisches Anwendungsgebiet solcher Schaltorgane werden Standardzellen vom Typ "D" genannt. Die Wölbung der Stirnseite, ab der das Schaltorgan den elektrischen Kontakt unterbricht, beträgt in diesem Fall 0,76 mm bis 1,8 mm. Bei einer Wölbung von mehr als 1,8 mm ist üblicherweise mit dem Austreten von Chemikalien aus dem Inneren des Gehäuses zu rechen.

Aus der EP-A-0 674 351 ist eine elektrochemische Sekundärzelle bekannt, deren Gehäuse eine von einer Druckmembran betätigbare Schnittvorrichtung umfasst, die bei Überschreitung eines Grenzdrucks im Inneren des Gehäuses einen elektrischen Leiter irreversibel durchtrennt, der einen Anschlusskontakt der elektrochemischen Sekundärzelle mit einer elektrochemisch aktiven Elektrode verbindet.

Auch bei Einsatz eines Schaltorgans, welches bei Überschreitung eines bestimmten Druckes im Inneren des Gehäuses die elektrische Verbindung zwischen einem Anschlusskontakt und der zugehörigen elektrochemisch aktiven Elektrode unterbricht, ist es möglich, dass der Druck weiter ansteigt und es letztendlich zu einem Austritt von Chemikalien aus dem Gehäuse der elektrochemischen Zelle kommt oder dieses gar explodiert. Aus diesem Grund wird beispielsweise in der EP-A-0 364 995, der EP-A-0 573 998 oder der EP-A-0 739 047 vorgeschlagen, eine in das Gehäuse integrierte, das Schaltorgan betätigende Druckmembran mit einem Berstbereich zu versehen, über den nach Aktivierung des Schaltorgans und weiterem Druckanstieg Chemikalien aus dem Inneren des Gehäuses austreten können.

Die im oben genannten Stand der Technik aufgeführten Mechanismen zur Erhöhung der Betriebssicherheit von elektrochemische Sekundärzellen eignen sich nicht für solche Zellen, die als Teil implantierbarer medizinischer Vorrichtungen eingesetzt werden, da hierfür besonders hohe Anforderungen, insbesondere in Bezug auf Sicherheit und Zuverlässigkeit bei gleichzeitig weitestgehender Reduzierung sämtlicher Abmessungen, erfüllt werden müssen. So ist beispielsweise eine Kontamination umliegenden Gewebes mit toxischen Substanzen sowie eine Gefährdung des Implantatträgers durch eine Fehlfunktion der elektrochemischen Sekundärzelle unter allen Betriebsbedingungen auszuschließen. Dies ist bei elektrochemischen Zellen, die einen Aufbau entsprechend dem beschriebenen Stand der Technik aufweisen, nicht zu realisieren, denn es zeigt sich, dass insbesondere toxische Gase auch bei bestimmungsgemäßem Normalbetrieb der elektrochemischen Zelle in intolerabel großen Mengen aus dem Gehäuse der elektrochemischen Zellen austreten.

In der nicht vorveröffentlichten EP-A-0 981 173 ist eine Schutzvorrichtung für eine mehrfach nachladbare elektrochemische Batterie mit einem Batteriegehäuse offenbart, wobei die Schutzvorrichtung mindestens ein von einem Detektororgan betätigbares Schaltorgan aufweist, welches ausgelegt oder einstellbar ist, bei einem vorbestimmten unzulässigen Betriebszustand der Batterie ein Nachladen und/oder Entladen derselben zu verhindern. Dabei umfasst die Schutzvorrichtung ein hermetisch dichtes Schutzgehäuse, welches das Batteriegehäuse aufnimmt, dem Detektororgan bei unzulässigem Betriebszustand der Batterie eine Formänderung aufprägt und Teil einer implantierbaren Vorrichtung ist. Insbesondere bei einer vorbestimmten unzulässig großen Volumenexpansion des Batteriegehäuses oder einem Gasaustritt aus dem Inneren des Batteriegehäuses, der zu einer unzulässig großen Druckerhöhung im Inneren des Schutzgehäuses führt, wird dem Detektororgan vom Schutzgehäuse eine Formänderung aufgeprägt, die das Schaltorgan betätigt. Letzteres kann als Schließer ausgebildet sein, der einen Nachladestromkreis elektrisch kurzschließt, welcher mittels einer Ladevorrichtung speisbar ist.

Der im Anspruch 1 angegebenen Erfindung liegt die Aufgabe zugrunde, eine elektrochemische Sekundärzelle zu schaffen, welche die spezifischen Anforderungen an Teile implantierbarer medizinischer Vorrichtungen erfüllt, wobei gleichzeitig der konstruktive Aufwand möglichst gering gehalten werden soll.

Diese Aufgabe wird bei einer elektrochemischen Sekundärzelle mit den Merkmalen des Oberbegriffs des Anspruchs 1 erfindungsgemäß dadurch gelöst, dass das Gehäuse als hermetisch dichtes Schutzgehäuse ausgebildet ist, welches Teil einer implantierbaren medizinischen Vorrichtung ist.

Indem das Gehäuse, welches die mindestens eine positive und mindestens eine negative Elektrode der elektrochemischen Sekundärzelle unmittelbar aufnimmt, als hermetisch
dichtes Schutzgehäuse ausgebildet ist, werden sämtliche chemische Substanzen der elektrochemischen Sekundärzelle sicher im Schutzgehäuse zurückgehalten.

Unter hermetischer Dichtheit wird vorliegend vorzugsweise hermetische Gasdichtheit nach Mil-Std 883 D verstanden. Durch diese Ausführung wird gewährleistet, dass bei Verwendung der elektrochemischen Sekundärzelle in einem elektronischen Implantat, das selbst wiederum in einem hermetisch dichten und ferner biokompatiblen Gehäuse untergebracht ist, neben flüssigen toxischen Substanzen auch keine Gase aus dem Schutzgehäuse der elektrochemischen Sekundärzelle austreten können. Durch die hermetische Gasdichtheit des Schutzgehäuses wird eine Gefährdung der umliegenden Elektronik sicher verhindert; dies bedeutet, dass die elektronischen Schaltungen, insbesondere integrierte Schaltungen, ungeschützt bleiben können, da eine Kontamination auch durch kleinste Mengen austretender Gase nicht möglich ist. Wird die elektrochemische Sekundärzelle nicht in einem Gehäuse eines elektronischen Implantats untergebracht, sondern unmittelbar in ihrem Schutzgehäuse implantiert, wird durch die hermetische Gasdichtheit nach Mil-Std 883 D eine entsprechende Kontamination des umliegenden Gewebes ausgeschlossen. In diesem Fall wird ferner mindestens eine Außenseite des Schutzgehäuses als Ganzes biokompatibel ausgebildet.

Der Begriff der unmittelbaren Aufnahme der mindestens jeweils einen ein aktives Material umfassenden positiven und der negativen Elektrode in dem als Schutzgehäuse ausgebildeten Gehäuse der elektronischen Sekundärzelle wird vorliegend in dem Sinne verstanden, dass zwischen dem hermetisch dichten Schutzgehäuse und den Elektroden kein weiteres die Elektroden aufnehmendes Gehäuse vorgesehen ist, insbesondere kein Gehäuse, welches im Wesentlichen der Aufnahme mechanischer Belastungen wie etwa der Aufnahme von Druckkräften durch Gasentwicklung oder dergleichen der elektrochemischen Zelle dient und/oder welches einen elektrisch leitenden Gehäuseabschnitt aufweist, dessen Innenseite mit einer Elektrode kontaktiert ist. Dies schließt nicht aus, dass zwischen wenigstens einer Elektrode und dem Schutzgehäuse eine elektrische Isolierung oder ähnliches vorgesehen ist, oder eine elektrische Isolierung und/oder eine biegeweiche Umhüllung die Elektroden umschließt. Ferner können im Schutzgehäuse mechanisch Einbauten vorgesehen und/oder dieses in mehrere Innenvolumina unterteilt sein, wobei durchaus ein Innenvolumen nur eine der Elektroden unmittelbar aufnehmen kann.

Es versteht sich, dass das Schutzgehäuse neben den Elektroden weitere Bestandteile der elektrochemischen Sekundärzelle aufnimmt, die für den Ablauf der elektrochemischen Reaktionen an den Elektroden erforderlich sind. Dies gilt insbesondere für einen Elektrolyten und gegebenenfalls für einen Separator (Diaphragma), auf welchen letzteren verzichtet werden kann, wenn dessen Funktion als ein eine Ionenwanderung gestattender elektrischer Isolator vom Elektrolyten übernommen wird, wie dies etwa bei Polymerelektrolyten der Fall ist.

Die vorliegende Erfindung ist nicht auf bestimmte Elektroden/Elektrolytsysteme beschränkt, vielmehr können prinzipiell jegliche gebräuchliche Systeme verwendet werden. Als Beispiele seien genannt: Nickel-Cadmium-Systeme (Sinterelektroden; Masseelektroden; flüssige, pastöse oder feste Elektrolytsysteme; Separator); Nickel-Metallhydrid-Systeme (Sinterelektroden; Masseelektroden; flüssige, pastöse oder feste Elektrolytsysteme; Separator); Lithium-basierende Systeme ((a) Lithium-Metall- oder -Legierungsanode, anorganische oder organische Einlagerungs- oder Redox- oder andere Kathode; flüssiges, gelartiges, pastöses oder festes Elektrolytsytem; gegebenenfalls Separator; oder: (b) Lithium-Interkalations-Anode, anorganische oder organische Einlagerungs- oder Redox- oder andere Kathode; flüssiges, gelartiges, pastöses oder festes Elektrolytsystem; gegebenenfalls Separator); Nickel-Eisen-Systeme; Nickel-Zink-Systeme; Zink-Silberoxid-Systeme; Cadmium-Silberoxid-Systeme; Zink-Mangandioxid-Systeme; Redoxsysteme wie z.B. Chinon/Hydrochinon-Systeme; oder Zink-Quecksilberoxid-Systeme und Silber-Metallhydrid-Systeme.

Im Rahmen der vorliegenden Erfindung können ferner mehr als nur eine positive und eine negative Elektrode zum Einsatz kommen, wobei die Elektroden vom Schutzgehäuse unmittelbar aufgenommen sind und in an sich bekannter Weise zur Spannungsvervielfachung serienverschaltet oder bipolar angeordnet oder zur Kapazitätsvervielfachung parallelverschaltet werden können. Ebenfalls möglich ist eine Kombination der genannten Verschaltungsarten.

Bei der implantierbaren medizinischen Vorrichtung kann es sich unter anderem um ein aktives elektronisches Hörimplantat, einen Herzschrittmacher, einen Drogenspender, einen Neurostimulator oder dergleichen handeln.

Vorteilhafte Weiterbildungen der Erfindung sind Gegenstand der Unteransprüche.

Ein Nachladen der elektrochemischen Sekundärzelle wird vorzugsweise verhindert, indem mindestens ein Schaltorgan als Öffner ausgebildet ist, der ausgelegt oder einstellbar ist, bei einem unzulässigen Betriebszustand der elektrochemischen Sekundärzelle einen Nachladestromkreis elektrisch zu unterbrechen, welcher mittels einer Ladevorrichtung speisbar ist.

Es kann ferner wenigstens ein Schaltorgan als Öffner ausgebildet sein, der ausgelegt oder einstellbar ist, bei einem unzulässigen Betriebszustand der elektrochemischen Sekundärzelle einen mit der elektrochemischen Sekundärzelle verbundenen Verbraucherstromkreis elektrisch zu unterbrechen. So ist es möglich, etwa bei einem Kurzschluss im Verbraucherstromkreis zu verhindern, dass eine übermäßig hohe elektrische Leistung der elektrochemischen Sekundärzelle entzogen wird, was ebenfalls einen unzulässigen Betriebszustand der elektrochemisehen Sekundärzelle, z.B. in Form eines Überschreitens einer vorgegebenen Grenztemperatur oder eines Grenzdrucks im Inneren des hermetisch dichten Schutzgehäuses, hervorrufen kann. Es ist auch denkbar, dass der Öffner so angeordnet ist, dass er mit dem Verbraucherstromkreis gleichzeitig den Nachladestromkreis unterbricht.

In bevorzugter weiterer Ausgestaltung der Erfindung ist mindestens ein Schaltorgan als Schließer ausgebildet, der ausgelegt oder einstellbar ist, bei einem unzulässigen Betriebszustand der elektrochemischen Sekundärzelle einen mittels einer Ladevorrichtung speisbaren Nachladestromkreis elektrisch kurzzuschließen, wodurch eine weitere Energiezufuhr zur elektrochemischen Sekundärzelle unterbrochen wird.

Es kann ferner mindestens ein Schaltorgan vorhanden sein, welches als Schließer ausgebildet ist, der ausgelegt oder einstellbar ist, bei einem unzulässigen Betriebszustand der elektrochemischen Sekundärzelle diese elektrisch kurzzuschließen. Ein solcher Schließer ist insbesondere in serieller Kopplung mit einer Überstromsicherung sinnvoll, die einen Strom in einem Nachlade- und/oder einem Verbraucherstromkreis der elektrochemischen Sekundärzelle irreversibel unterbrechen kann. Die Überstromsicherung kann als Schmelzsicherung ausgebildet sein, die bei Kurzschluss von der in der elektrochemischen Sekundärzelle gespeicherten Restenergie durchgebrannt wird. Reicht die Energie hierzu nicht aus, kann die elektrochemische Sekundärzelle vollständig entladen werden. Es ist ebenso möglich, dass wenigstens eine Überstromsicherung den Strom im Nachlade- und/oder einem Verbraucherstromkreis lediglich begrenzt, wobei vorteilhaft die Überstromsicherung als Kaltleiter (PTC-Widerstand) ausgebildet ist, dessen Widerstand mit zunehmender Temperatur ansteigt.

Die Schaltorgane können einen Stromkreis, in den sie eingebunden sind, grundsätzlich reversibel oder irreversibel unterbrechen. Reversibel arbeitende Schaltorgane bieten den Vorteil, dass man ihre Funktion zerstörungsfrei, beispielsweise im zusammengebauten Zustand im Zusammenwirken mit anderen Komponenten der elektrochemischen Sekundärzelle bzw. der implantierbaren medizinischen Vorrichtung, prüfen kann.

Handelt es sich bei dem vorgegebenen unzulässigen Betriebszustand der elektrochemischen Sekundärzelle um ein Überschreiten einer Grenztemperatur als vorgegebene gerade noch zulässige Temperatur an definierter Position der elektrochemischen Sekundärzelle, so ist mindestens ein Detektororgan ausgelegt oder einstellbar, die Temperatur der elektrochemischen Sekundärzelle, insbesondere innerhalb des Schutzgehäuses, zu erfassen, und bei Erreichen einer unzulässigen Temperatur mindestens ein Schaltorgan zu betätigen.

Durch Gasentwicklung und/oder Quellen der Elektroden und/oder Temperaturerhöhung beim Betrieb der elektrochemischen Sekundärzelle kann es zu einer Erhöhung des Drucks im Inneren des Schutzgehäuses kommen. Wird als Kriterium für den vorgegebenen unzulässigen Betriebszustand der elektrochemischen Sekundärzelle ein Überschreiten eines Grenzdrucks als vorgegebenem noch zulässigen Druck innerhalb des Schutzgehäuses gewählt, so ist mindestens ein Detektororgan ausgelegt oder einstellbar, den Druck in einem mindestens eine Elektrode aufnehmenden Innenraum des Schutzgehäuses zu erfassen und bei Erreichen eines unzulässigen Drucks mindestens ein Schaltorgan zu betätigen. Ist das nach außen hermetisch dichte Schutzgehäuse im Inneren in mehrere Abschnitte unterteilt, die zwar gegeneinander abgedichtet sind ohne jedoch eine hermetische Dichtheit untereinander gewährleisten zu müssen, kann der Druck vorzugsweise in einem der Abschnitte erfasst werden. Ein zu einer Volumenexpansion der Elektroden führendes Quellen derselben und die daraus resultierende Druckerhöhung im Inneren des Schutzgehäuses kann über ein Detektororgan auch durch unmittelbare Wechselwirkung des Detektororgans mit mindestens einer Elektrode erfasst werden, indem das Detektororgan vorzugsweise so positioniert ist, dass mindestens eine Elektrode bei einem unzulässigen Betriebszustand der elektrochemischen Sekundärzelle am Detektororgan, eventuell unter Zwischenschaltung einer elektrischen Isolierung, anliegt und diesem eine mindestens ein Schaltorgan betätigende Formänderung aufprägt.

Mindestens ein Detektororgan ist vorzugsweise dergestalt ausgelegt oder einstellbar, dass demselben bei einem unzulässigen Betriebszustand der elektrochemischen Sekundärzelle eine Formänderung aufgeprägt wird, die mindestens ein Schaltorgan betätigt. Dabei kann das Detektororgan so angeordnet und/oder ausgebildet sein, dass ihm in Abhängigkeit vom Innendruck und/oder der Temperatur im Schutzgehäuse und/oder einem Quellen der Elektroden eine elastische und/oder plastische Formänderung aufgeprägt wird. Die dem Detektororgan bei einem unzulässigen Betriebszustand der elektrochemischen Sekundärzelle aufgeprägte Formänderung betätigt sinnvollerweise mindestens ein Schaltorgan mechanisch. Eine unmittelbare mechanische Betätigung des Schaltorgans durch die Formänderung des Detektororgans ist besonders zuverlässig, da sie zwangsweise arbeitet, ohne auf nichtmechanische Übertragungsglieder angewiesen zu sein.

Dies schließt nicht aus, dass, insbesondere wenn zwei oder mehrere Schaltorgane redundant vorhanden sind, mindestens ein Schaltorgan mittels einer die Formänderung des Detektororgans erfassenden Auswerteelektronik betätigbar ist. Vorteilhaft wird ein elektrischer Dehnungsmesser eingesetzt, der die Formänderung des Detektororgans erfasst und mit Änderung einer elektrischen Größe, die von der Auswerteelektronik überwacht wird, antwortet. Handelt es sich bei dem elektrischen Dehnungsmesser um ein passives System, kann er die Formänderung des Detektororgans in eine Änderung seines elektrischen Widerstands (Dehnungsmessstreifen), seiner Induktivität oder seiner Kapazität umwandeln. Alternativ kann ein aktiver elektrischer Dehnungsmesser eingesetzt werden, der, wie z.B. ein Piezoelement, mit einer Ladungsänderung auf eine vom Detektororgan auf den Dehnungsmesser aufgebrachte Formänderung reagiert.

In weiterer Ausgestaltung der Erfindung ist mindestens ein Detektororgan Teil des Schutzgehäuses und insbesondere als wölbbare Membran ausgebildet, die vorzugsweise eine Außen- oder Trennwand des hermetisch dichten Schutzgehäuses bildet. Mindestens ein Detektororgan kann im Inneren des Schutzgehäuses untergebracht sein. Dies erlaubt eine raumsparende Konstruktion und eine gut vorherbestimmbare Formänderung des Detektororgans bei Druckanstieg im Schutzgehäuse.

Insbesondere die für eine implantierbare medizinische Vorrichtung besonders kritische Dicke des Schutzgehäuses lässt sich auf ein Minimum reduzieren, wenn mindestens eine Membran in eine Seitenwand des hermetisch dichten Schutzgehäuses integriert ist, wobei die Wölbungsrichtung der Membran im Wesentlichen lotrecht zur kleinsten Ausdehnung des Schutzgehäuses verläuft. Ein in Richtung der kleinsten Ausdehnung des Schutzgehäuses ober- und unterhalb derselben vorgesehener Deckel bzw. Boden des Schutzgehäuses bleiben dann sinnvollerweise frei von Detektor- und Schaltorganen, so dass die Dicke des Schutzgehäuses diejenige der Elektroden/Elektrolyt-Anordnung nur wenig übersteigt. Ferner ist es möglich, mindestens ein Detektororgan außerhalb eines die Elektroden aufnehmenden Abschnitts des Schutzgehäuses anzuordnen und in Fluidverbindung mit dem Inneren des Schutzgehäuses zu bringen, so dass eine größere Freiheit bei der Anpassung an Gegebenheiten des Implantationsortes besteht. Eine redundante Absicherung gegen einen unzulässigen Betriebszustand der elektrochemischen Sekundärzelle ergibt sich, wenn beispielsweise zwei Membranen vorgesehen werden, von denen eine als Teil eines Schließers ausgebildet und mittels dieser Membran bei einem unzulässigen Betriebszustand der elektrochemischen Sekundärzelle ein Kontaktpaar des Schließers elektrisch kurzschließbar ist. Die zweite Membran kann als Teil eines Öffners ausgebildet sein, wobei mittels dieser zweiten Membran bei einem unzulässigen Betriebszustand der elektrochemischen Sekundärzelle ein Kontaktpaar des Öffners elektrisch außer Eingriff bringbar ist.

Das Schutzgehäuse muss unter allen Betriebsbedingungen eine hermetisch dichte Barriere mit Bezug auf einen außerhalb des Schutzgehäuses befindlichen Außenraum bilden. Insbesondere dürfen weder die Energiezufuhr und Energieabfuhr noch die in der elektrochemischen Sekundärzelle gespeicherte Energie sowie die beim Betrieb ablaufenden chemischen Prozesse zu einer Zerstörung der hermetischen Dichtheit führen. Faktoren, die bei der Auslegung des Schutzgehäuses und der Materialwahl besonders berücksichtigt werden sollten sind: Chemische Einwirkungen des Elektrolyten und der Elektroden auf das Schutzgehäuse bei Lager- sowie Betriebstemperatur; elektrochemische Prozesse im Innenraum des Schutzgehäuses aufgrund aller denkbar möglichen Lade- bzw. Entladevorgänge; mechanische Belastungen des Schutzgehäuses infolge chemischer, elektrochemischer oder physikalischer (insbesondere thermischer) Prozesse wie z.B. Gasentwicklung im Inneren des Schutzgehäuses, Quellen der Elektroden, Änderungen des Umgebungsdrucks, Erwärmung durch Energiezufuhr oder Energieabfuhr und Änderung der Lagertemperatur.

Ein geeignetes Schutzgehäuse lässt sich insbesondere als hermetisch dichter stoffschlüssiger Verbund zwischen wenigstens einem elektrisch leitenden metallischen Gehäuseabschnitt und mindestens einem elektrisch isolierenden anorganisch-nichtmetallischen Gehäuseabschnitt erzielen. Die Gehäuseabschnitte werden bevorzugt miteinander verschweißt, können aber auch mittels eines Lötvorgangs miteinander hermetisch dicht verbunden werden.

Materialien, die insbesondere chemisch inert gegenüber den üblicherweise verwendeten Elektroden/Elektrolytsystemen sowie beständig mit Bezug auf die ablaufenden elektrochemischen Prozesse sind, umfassen Metalle und Edelmetalle, die eine Passivierungsschicht gegen chemische Zersetzung bilden. Hierzu zählen unter anderem: Platin, Chromnickelstahl, Nickellegierungen, Titan, Tantal und Niob. Als anorganisch-nichtmetallische Isolatorwerkstoffe werden vorzugsweise Keramikwerkstoffe eingesetzt, die mit dem mindestens einen metallischen Gehäuseabschnitt stoffschlüssig hermetisch dicht verbindbar sind.

In mindestens einem elektrisch isolierenden anorganisch-nichtmetallischen Gehäuseabschnitt lässt sich eine mindestens einpolige elektrisch leitende Durchführung hermetisch dicht und elektrisch isoliert aufnehmen. Dabei kann der Isolatorwerkstoff einer elektrischen Isolierung der Pole der Durchführung sowohl untereinander als auch mit Bezug auf angrenzende elektrisch leitende metallische Gehäuseabschnitte dienen.

Vorzugsweise weist mindestens ein Pol der hermetisch dichten Durchführung einen metallischen Kontaktstift auf, der den elektrisch isolierenden anorganischnichtmetallischen Gehäuseabschnitt hermetisch dicht durchsetzt. Die Kontaktstifte sind zweckmäßig in dem Isolatorwerkstoff, beispielsweise in einem keramischen Substrat, und dieser seinerseits in einer Außenwand des Schutzgehäuses hermetisch dicht mittels einer stoffschlüssigen Verbindung, vorzugsweise einer Lötverbindung, insbesondere einer Goldlötverbindung, aufgenommen. Als besonders geeignete Werkstoffe für den Kontaktstift können Platin-Iridiumlegierungen betrachtet werden.

Es kann von Vorteil sein, dass die Kontaktstifte in dem elektrisch isolierenden anorganisch-nichtmetallischen Gehäuseabschnitt und dieser in einer metallischen Aufnahme hermetisch dicht mittels einer stoffschlüssigen Verbindung aufgenommen sind, wobei die metallische Aufnahme mit einer Außenwand des Schutzgehäuses ebenfalls stoffschlüssig verbunden ist. Zur Verbindung der metallischen Aufnahme mit der Außenwand des Schutzgehäuses kann eine Schweißverbindung eingesetzt werden.

Die Durchführung kann prinzipiell ein- oder mehrpolig ausgeführt sein, wobei vorteilhafterweise mindestens ein Pol der hermetisch dichten Durchführung mit einer Elektrode der elektrochemischen Sekundärzelle kontaktiert ist. Mittels der hermetisch dichten Durchführung ist jedoch nicht nur eine Energie- sondern prinzipiell auch eine Signalübertragung durch eine Wandung des Schutzgehäuses möglich. Beispielsweise kann mittels eines Pols der Durchführung ein Potential einer Potentialsonde durch die Schutzgehäusewandung durchgeführt werden, wobei die Potentialsonde insbesondere im Elektrolyten zwischen einer positiven und einer negativen Elektrode der elektrochemischen Sekundärzelle angeordnet ist, wie dies in der nicht vorveröffentlichten EP-A-0 981 262 beschrieben ist.

Die Abmessungen des im Schutzgehäuse vorgesehenen, vorzugsweise von einem keramischen Werkstoff gebildeten, elektrisch isolierenden Abschnitts können minimiert werden und sich auf den die Durchführung aufnehmenden Abschnitt beschränken, wenn die Anzahl der Pole der Durchführung der Anzahl der Energie- und Signalabgriffe entspricht, über welche die elektrochemischen Sekundärzelle mit weiteren Komponenten der implantierbaren medizinischen Vorrichtung in Verbindung steht. In diesem Fall kann das übrige Wandung des Schutzgehäuses in einem metallischen Werkstoff ausgeführt werden, dessen Innenseite mit Bezug auf die Elektroden elektrisch isoliert ist.

Auch mindestens ein elektrisch leitender metallischer Gehäuseabschnitt kann mit einem im Inneren des Schutzgehäuses untergebrachten Energie- oder Signalabgriff kontaktiert werden. Insbesondere ist mindestens ein elektrisch leitender metallischer Gehäuseabschnitt mit einer Elektrode der elektrochemischen Sekundärzelle elektrisch kontaktiert. Ein besonders einfacher Aufbau des Schutzgehäuses ergibt sich, wenn die positive und die negative Elektrode der elektrochemischen Sekundärzelle jeweils mit einem elektrisch leitenden metallischen Gehäuseabschnitt verbunden sind, wobei die beiden metallischen Gehäuseabschnitte gegeneinander elektrisch isoliert sind, wobei auf eine Durchführung verzichtet werden kann.

Die Elektroden weisen vorzugsweise in an sich bekannter Weise einen elektrischen Abgriff auf, der seinerseits entweder einen Pol der hermetisch dichten Durchführung oder einen elektrisch leitenden metallischen Gehäuseabschnitt von der Innenseite des Schutzgehäuses her kontaktiert. Die Kontaktierung der Abgriffe am elektrisch leitenden Gehäuseabschnitt oder am Pol der Durchführung kann dabei vorzugsweise unmittelbar über Schweiß- oder Lötverbindungen, oder aber mittelbar über kraftschlüssig anliegende elektronenleitende Zwischenglieder wie z.B. Federn, Stifte, Metallschäume oder dergleichen realisiert werden.

In weiterer Ausgestaltung der Erfindung ist zur Erhöhung der Betriebssicherheit und zur Schaffung einer Redundanz das Schutzgehäuse so dimensioniert, dass seine hermetische Dichtheit erhalten bleibt, selbst wenn bei einem unzulässigen Betriebszustand der elektrochemischen Sekundärzelle diese weiterhin nachladbar oder entladbar ist. Dies bedeutet, dass selbst bei einer Fehlfunktion z.B. des Detektor- und/oder des Schaltorgans das Schutzgehäuse bis zu gewissen Obergrenzen den physikalischen Belastungen standhält, die auftreten, wenn die Zufuhr oder Abfuhr von Energie auch dann nicht unterbrochen wird, wenn die elektrochemische Sekundärzelle in einen unzulässigen Betriebszustand gerät.

Ist eine Außenseite des Schutzgehäuses als Ganzes biokompatibel ausgestaltet, kann dieses direkt implantiert werden und über fest angeschlossene oder lösbare elektrische Leitungen mit einem Verbraucher verbunden werden, von dessen Implantationsort man somit unabhängig ist, wie dies auch in der nicht vorveröffentlichten EP-A-0 982 784 beschrieben ist. Als Materialien für das biokompatible Schutzgehäuse kommen vorzugsweise Titan, Titanlegierungen, Niob, Tantal, implantierbare Stähle oder ein Verbund aus diesen oder anderen implantierbaren metallischen mit keramischen Werkstoffen wie Aluminium-Oxid-Keramik in Betracht, wobei eine Ummantelung des gesamten Schutzgehäuses mit einem biokompatiblen Polymer, wie beispielsweise Silikon, Polytetrafluorethylen (PTFE), Polymethan, Parylen oder dergleichen, sinnvoll sein kann.

Nachfolgend sind vorteilhafte Ausführungsformen der Erfindung anhand der Zeichnungen näher erläutert. Es zeigt:
- Fig. 1: einen schematischen Schaltplan mit einer in einen Verbraucher- und einen Nachladestromkreis eingebundenen elektrochemischen Sekundärzelle;
- Fig. 2: einen schematischen Schnitt durch eine erste Ausführungsform einer elektrochemischen Sekundärzelle mit hermetisch dichtem Schutzgehäuse und reversibel arbeitendem Schaltorgan;
- Fig. 3: eine schematische perspektivische Sicht auf die Ausführungsform nach Fig. 2;
- Fig. 4: in größerem Maßstab einen Teilausschnitt der Ausführungsform nach Fig. 2;
- Fig. 5: einen schematischen Schnitt durch eine zweite Ausführungsform einer elektrochemischen Sekundärzelle;
- Fig. 6: einen schematischen Schnitt durch eine dritte Ausführungsform einer elektrochemischen Sekundärzelle mit einem Schaltorgan in geschlossenem Zustand;
- Fig. 7: einen schematischen Schnitt durch die Ausführungsform nach Fig. 6 mit dem Schaltorgan in geöffnetem Zustand;
- Fig. 8: einen schematischen Schnitt durch eine weitere Ausführungsform einer elektrochemischen Sekundärzelle mit einem Schaltorgan in geschlossenem Zustand;
- Fig. 9: einen schematischen Schnitt durch die Ausführungsform nach Fig. 8 mit dem Schaltorgan in geöffnetem Zustand;
- Fig. 10: eine schematische Schnittdarstellung noch einer weiteren Ausführungsform einer elektrochemischen Sekundärzelle mit irreversibel arbeitendem Schaltorgan;
- Fig. 11: eine schematische Schnittdarstellung einer weiteren abgewandelten Ausführungsform einer elektrochemischen Sekundärzelle;
- Fig. 12: eine schematische Darstellung im Schnitt einer elektrochemischen Sekundärzelle mit hermetisch dichter einpoliger Durchführung durch eine Außenwand eines Schutzgehäuses zur Bildung eines Strompfads zu bzw. von einer Elektrode der elektrochemischen Sekundärzelle;
- Fig. 13: eine schematische perspektivische Sicht auf eine weitere Ausführungsform einer elektrochemischen Sekundärzelle mit einem Kurzschlussschalter und einem Berststreifen als irreversiblem Öffner;
- Fig. 14: eine schematische Schnittdarstellung der Ausführungsform nach Fig. 13;
- Fig. 15: eine schematische perspektivische Sicht auf noch eine weitere Ausführungsform einer elektrochemischen Sekundärzelle;
- Fig. 16: einen schematischen Schnitt durch eine elektrochemische Sekundärzelle mit hermetisch dichter zweipoliger Durchführung als Strompfad zu bzw. von je einer positiven und einer negativen Elektrode der elektrochemischen Sekundärzelle; und
- Fig. 17: einen schematischen Schnitt durch eine elektrochemische Sekundärzelle mit zweipoliger Durchführung, wobei die Durchführung sowie je zwei Schalt- und Detektororgane in einer Seitenwand des Schutzgehäuses integriert sind.

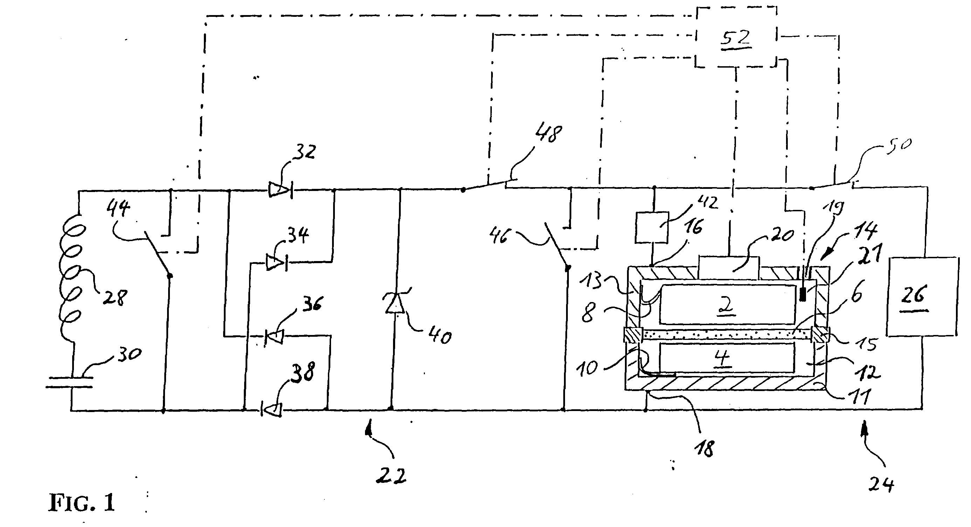

Entsprechend der Fig. 1 weist eine elektrochemische Sekundärzelle als Teil einer implantierbaren medizinischen Vorrichtung ein Schutzgehäuse 14 auf, welches eine positive Elektrode 2, eine negative Elektrode 4, einen Elektrolyten 12 sowie einen der Vermeidung eines elektrischen Kurzschlusses zwischen den Elektroden 2, 4 dienenden Separator 6 hermetisch dicht aufnimmt. Der Separator 6, der zwischen den beiden Elektroden 2 und 4 positioniert ist, dient als elektrischer Isolator, der jedoch eine Ionenwanderung zwischen den Elektroden 2 und 4 erlaubt. Die positive Elektrode 2 und die negative Elektrode 4 weisen je einen elektronenleitenden Abgriff 8 bzw. 10 auf, wobei der Abgriff 8 mit einem elektrisch leitenden Gehäuseabschnitt 13 und der Abgriff 10 mit einem elektrisch leitenden Gehäuseabschnitt 11 des Schutzgehäuses 14 kontaktiert sind. Die beiden Gehäuseabschnitte 11 und 13 sind gegeneinander mittels eines anorganisch-nichtmetallischen Gehäuseabschnitts 15 elektrisch isoliert, welcher vorzugsweise in einem keramischen Werkstoff ausgeführt ist. Ein weiterer elektrisch isolierender anorganisch-nichtmetallischer Gehäuseabschnitt 19 nimmt eine elektrisch leitende Durchführung auf, die der Durchführung eines Signals von einem als Temperatursensor ausgeführten Detektororgan 21 dient, welches an vorgegebener Stelle innerhalb des Schutzgehäuses 14 eine Temperatur der elektrochemischen Sekundärzelle aufnimmt und einen unzulässigen Betriebszustand der elektrochemischen Sekundärzelle in Form einer unzulässig hohen Temperatur erfasst.

Die Gehäuseabschnitte 11 und 13 weisen an ihren Außenseiten je einen Anschluss 18 bzw. 16 auf, über welche die negative Elektrode 4 bzw. die positive Elektrode 2 mit einem Nachladestromkreis 22 und einem Verbraucherstromkreis 24 verbunden sind. Das Schutzgehäuse 14 steht dergestalt mit einem weiteren Detektororgan 20 in Wirkverbindung, dass dem Detektororgan 20 bei einem unzulässigen Betriebszustand der elektrochemischen Sekundärzelle in Form eines unzulässig hohen Innendrucks im Inneren des Schutzgehäuses 14 eine Formänderung aufgeprägt wird. Dabei kann eine Gasentwicklung und/oder ein Quellen der Elektroden 2, 4 und/oder eine Temperaturerhöhung beim Betrieb der elektrochemischen Sekundärzelle die Druckerhöhung im Inneren des Schutzgehäuses 14 bewirken.

Die elektrochemische Sekundärzelle versorgt im Verbraucherstromkreis 24 über einen Öffner 50 einen Verbraucher 26 der implantierbaren medizinischen Vorrichtung, bei welcher letzteren es sich beispielsweise um eine implantierbare aktive Hörhilfe handeln kann. Der Nachladestromkreis 22 weist eine Empfangsspule 28 auf, die zusammen mit einem Kondensator 30 einen Serienresonanzkreis bildet, der durch einen nicht dargestellten zweiten Serienresonanzkreis eines externen Sendeteils mit gleicher Resonanzlage angeregt wird, wie dies in der EP-B-0 499 939 näher beschrieben ist. Der Nachladestromkreis 22 schließt sich je nach Phase über Dioden 32, 38 bzw. 34, 36, einen Öffner 48, eine Überstromsicherung 42 und die im Schutzgehäuse 14 aufgenommenen Elektroden 2, 4. Eine Zenerdiode 40 schützt die elektrochemische Sekundärzelle vor zu hoher Spannung des Nachladestromkreises. Parallel zu der Empfangsspule 28 und dem Kondensator 30 ist ein Schließer 44 vorgesehen. Ein weiterer Schließer 46 ist parallel zur elektrochemischen Sekundärzelle und der Überstromsicherung 42 angeordnet.

Wie durch strichpunktierte Linien in Fig. 1 angedeutet, betätigen die Detektororgane 20 und 21 die Schaltorgane 44, 46, 48 und 50, die Teil der implantierbaren medizinischen Vorrichtung sind. Dies kann beim Detektororgan 20 entweder unmittelbar, beispielsweise durch mechanische Kopplung von Detektororgan 20 und einem oder mehreren Schaltorganen, oder mittelbar über eine optionale Auswerteelektronik 52 erfolgen, welche die Formänderung des Detektororgans 20 erfasst und ein oder mehrere Schaltorgane elektrisch bzw. elektromechanisch betätigt. Die Auswerteelektronik 52 dient ferner der Erfassung des Signals des als Temperatursensor ausgebildeten Detektororgans 21 und der Betätigung eines oder mehrerer der Schaltorgane 44, 46, 48 und 50. Es versteht sich, dass nicht alle Schaltorgane 44, 46, 48 und 50 vorhanden sein müssen, und dass die Einteilung, welche der Schaltorgane unmittelbar oder über die optionale Auswerteelektronik 52 betätigt werden, je nach Einsatzzweck und gewünschter Redundanz variiert werden kann. Es kann weiterhin vorgesehen sein, die Betätigung eines Schaltorgans oder mehrerer Schaltorgane nur dann auszuführen, wenn beide Detektororgane 20 und 21 einen unzulässigen Betriebszustand der elektrochemischen Sekundärzelle signalisieren.

Die in Fig. 1 gezeigte Stellung der Schaltorgane 44, 46, 48 und 50 entspricht einer Grundposition bei normalem Betrieb. Im Falle eines unzulässigen Betriebszustandes der elektrochemischen Sekundärzelle wird wenigstens eines dieser Schaltorgane betätigt.

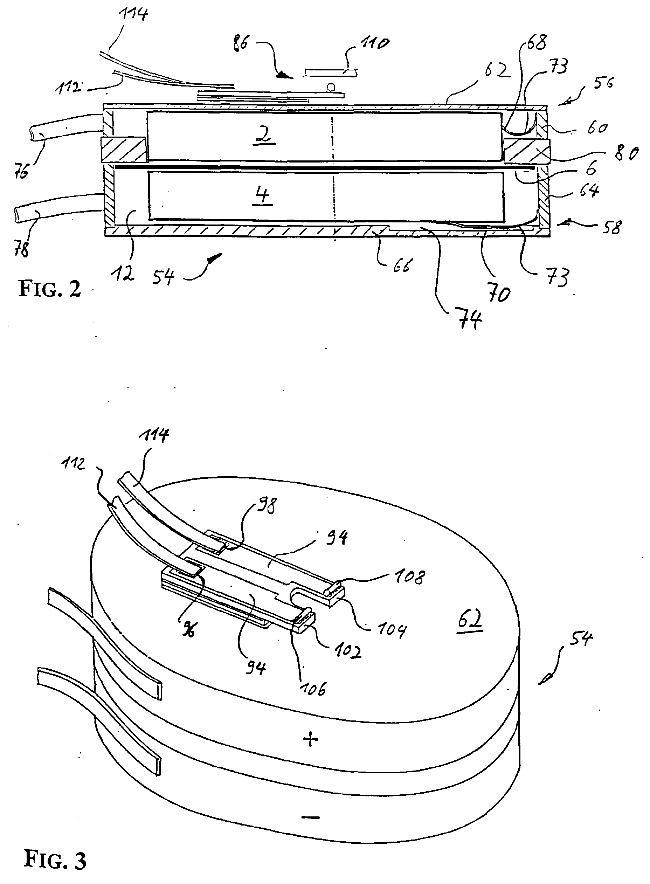

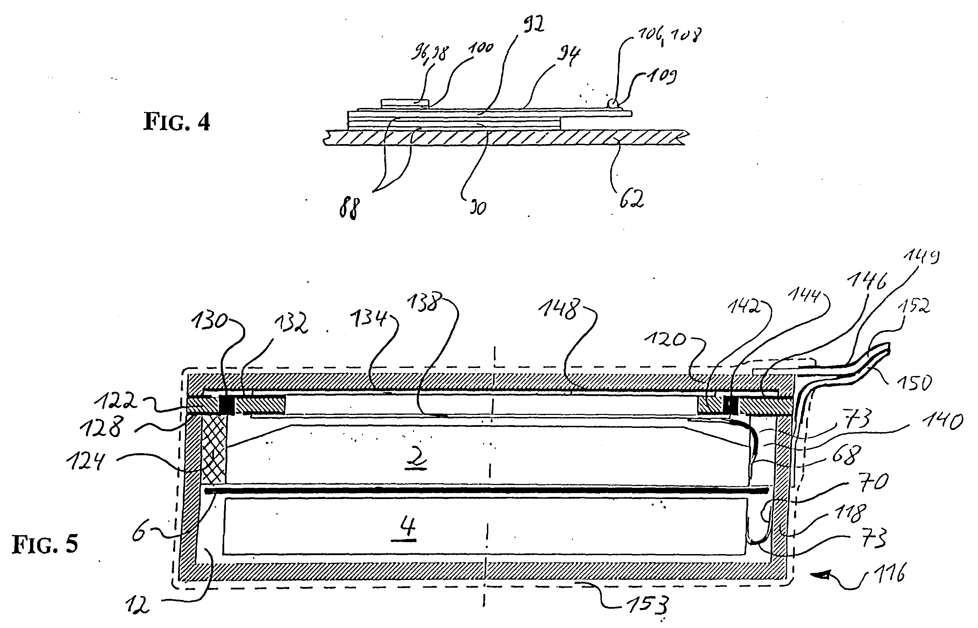

Eine erste Ausführungsform einer elektrochemischen Sekundärzelle ist in den Fign. 2 bis 4 dargestellt und umfasst ein hermetisch dichtes Schutzgehäuse 54 mit einem becherförmigen Deckel 56 und einem ebenfalls becherförmigen Boden 58. Eine hohlzylindrische Seitenwand 60 des Deckels 56 ist mit einer Deckelplatte 62 verschweißt, die als wölbbare Membran das Detektororgan der elektrochemischen Sekundärzelle bildet. Der Boden 58 wird von einer hohlzylindrischen Seitenwand 64 und einer mit dieser verschweißten Bodenplatte 66 gebildet. Die Elektroden 2 und 4 der elektrochemischen Sekundärzelle sind im Inneren des Schutzgehäuses 54 aufgenommen, wobei die positive Elektrode 2 einen Abgriff aufweist, der als Kontaktlasche 68 ausgebildet und mit einer Innenseite der Seitenwand 60 kontaktiert ist. Die negative Elektrode 4 der elektrochemischen Sekundärzelle wird mittels einer Kontaktlasche 70 als Abgriff von innen mit der Seitenwand 64 in elektrisch leitenden Kontakt gebracht, wobei eine Aussparung 74 im Randbereich der Bodenplatte 66 eine Verlegung der Kontaktlasche 70 erleichtert. Die Kontaktlaschen 68 und 70 sind jeweils mit der Seitenwand 60 bzw. 64 elektrisch leitend verlötet oder verschweißt und können beide mit einer sie umgebenden Isolierschicht 73, z.B. in Form eines aufgeschobenen Isolationsschlauches, versehen sein. Es versteht sich, dass anstelle der Löt- oder Schweißverbindung auch vorgesehen sein kann, die Kontaktlasche 68 und/oder 70 lediglich federnd vorgespannt an den entsprechenden Gehäuseteilen anliegen zu lassen, zu welchem Zweck entweder Anpresselemente wie Metallschäume oder Federn verwendet werden können oder die Kontaktlaschen 68, 70 selbst für den notwendigen Anpressdruck sorgen. Auch kann anstelle der Kontaktlasche 68 und/oder 70 prinzipiell jede andere Form der elektrischen Kontaktierung zum Einsatz kommen, so z.B. ein zwischen einer Unterseite der Deckelplatte 62 und einer ihr zugewandten Stirnfläche der Elektrode 2 vorgespannt eingelegter Metallschaum, wobei vorteilhaft ein weiterer Metallschaum zwischen einer Oberseite der Bodenplatte 66 und einer ihr zugewandten Stirnfläche der Elektrode 4 zwischengelegt wird.

Der Innenraum des Schutzgehäuses 54 ist mit einem Elektrolyten 12 gefüllt, wobei die positive und die negative Elektrode 2 bzw. 4 durch einen schematisch eingezeichneten Separator 6 voneinander getrennt sind, der einen direkten elektrischen Kontakt zwischen den Elektroden 2 und 4 verhindert, jedoch eine Ionenwanderung zulässt. Der Deckel 56 und der Boden 58 weisen je einen elektrischen Anschluss 76 bzw. 78 auf, die den Anschlüssen 16 bzw. 18 gemäß Fig. 1 entsprechen, und sind beide aus einem elektrisch leitfähigen metallischen Werkstoff (beispielsweise Titan) gefertigt, der gegenüber dem Elektrolyten 12 und den Elektroden 2, 4 chemisch inert und beständig mit Bezug auf die ablaufenden elektrochemischen Prozesse ist.

Die Seitenwände 60 und 64 sind über ihre einander zugewandten Stirnflächen unter Zwischenschaltung eines Isolationsrings 80 hermetisch dicht miteinander verschweißt oder verlötet, wobei der Isolationsring 80 einen kleineren Innendurchmesser als die Seitenwände 60 und 64 hat. Als Werkstoff für den Isolationsring 80 kommt z.B. Oxidkeramik in Frage.

Auf der Deckelplatte 62 ist ein insgesamt mit 86 bezeichnetes Schaltorgan angebracht, welches dem Schließer 44 der Fig. 1 entspricht. Als wesentliches Bauteil besitzt der Schließer 86 einen flexiblen Kontaktträger 92, beispielsweise aus Polyimid, der die Form einer etwa rechteckigen dünnwandigen Platte hat, deren eine kurze Seite einen U-förmigen Einschnitt aufweist, so dass zwei Federarme 102, 104 entstehen. Entlang der beiden längeren Seiten sind auf der Oberseite des Kontaktträgers 92 Metallisierungen 94 angebracht, die sich bis in die Federarme 102 bzw. 104 erstrecken, wo auf den Metallisierungen 94 je ein Abschnitt eines Platindrahtes als Kontakt 106 bzw. 108 über eine Lötverbindung 109 angelötet ist. In der Nähe der zweiten kurzen Seite des Kontaktträgers 94 ist mittels einer Lötschicht 100 eine Kontaktplatte 96 und 98 jeweils mit einer der beiden Metallisierungen 94 verbunden. Dabei tragen die Kontaktplatten 96 und 98 je einen Anschluss 112 bzw. 114, so dass der Anschluss 112 elektrisch mit dem Kontakt 106 und der Anschluss 114 elektrisch mit dem Kontakt 108 verbunden ist. In geringem Abstand über den Kontakten 106 und 108 ist eine Kontaktbrücke 110 angeordnet, mit der die Kontakte 106, 108 in Berührung bringbar sind, um diese elektrisch kurzzuschließen. Der flexible Kontaktträger 92 ist über einen mehrschichtigen Aufbau mit der Deckelplatte 62 dergestalt verbunden, dass die Kontakte 106, 108 mittig über der Deckelplatte 62 angeordnet sind und in der Draufsicht entlang einer Symmetrieachse der runden Deckelplatte 62 verlaufen. Wie in Fig. 4 dargestellt, umfasst der mehrschichtige Aufbau zwischen dem Kontaktträger 92 und der Deckelplatte 62 ausgehend von der der Deckelplatte 62 zugewandten Unterseite des Kontaktträgers 92 eine Klebschicht 88, eine Distanzplatte 90 und eine zweite Klebschicht 88. Der mehrschichtige Aufbau erstreckt sich etwa von der die Kontaktplatten 96, 98 aufweisenden kurzen Seite des Kontaktträgers 92 bis zum Grund des U-förmigen Einschnitts, der die beiden Federarme 102, 104 trennt, so dass diese frei in genau vorgegebenem Abstand über der Deckelplatte 62 stehen.

Die Kontaktlasche 68 kann als Schmelzsicherung ausgebildet sein, welche die elektrische Verbindung zwischen der positiven Elektrode 2 und dem Anschluss 76 unterbricht, wenn der über sie fließende Strom einen vorgegebenen Grenzwert überschreitet. In diesem Fall ist zwischen einer der Deckelplatte 62 zugewandten Stirnfläche der positiven Elektrode 2 und der Deckelplatte 62 eine Isolierung vorzusehen. Entsprechend lässt sich auch die Kontaktlasche 70 als Schmelzsicherung auslegen, wobei zwischen der negativen Elektrode 4 auf der einen Seite und der Seitenwand 64 und/oder der Bodenplatte 66 auf der anderen Seite eine Isolierung anzuordnen ist, die auch beim Ansprechen dieser Schmelzsicherung einen elektrischen Kontakt durch direktes Anliegen der negativen Elektrode 4 an den Gehäuseteilen 64 und/oder 66 verhindert.

Kommt es beim Betrieb der elektrochemischen Sekundärzelle durch Quellen (Volumenzunahme) der Elektroden 2, 4 und/oder durch Gasentwicklung und/oder durch Temperaturzunahme zu einem Ansteigen des Innendrucks im Inneren des Schutzgehäuses 54 wird dem als Membran ausgelegten Detektororgan (Deckelplatte 62) gezielt eine Wölbung aufgeprägt, indem die übrigen Außenwände des Schutzgehäuses 54 steifer als die Deckelplatte 62 ausgelegt sind und sich nur wenig verformen. Beim Quellen der Elektroden 2, 4 können sich diese auch unmittelbar oder mittelbar über Isolierschichten und/oder den Elektrolyten 12, welcher ein Festkörperelektrolyt sein kann, an die Innenflächen der Deckelplatte 62 bzw. der Bodenplatte 66 anlegen und auf diese Weise eine Formänderung der Deckelplatte 62 bewirken.

Durch die Wölbung der Deckelplatte 62 nähern sich die Kontakte 106 und 108 der Kontaktbrücke 110, um schließlich ― bei Überschreiten eines einen gerade noch zulässigen Betriebszustand der elektrochemischen Sekundärzelle signalisierenden Grenzwerts des Innendrucks im Schutzgehäuse 54 ― die Kontaktbrücke 110 zu berühren und die Anschlüsse 112 und 114 und über diese den Nachladestromkreis 22 elektrisch kurzzuschließen, wobei eine weitere Energiezufuhr zu den Elektroden 2, 4 der elektrochemischen Sekundärzelle unterbunden wird. Durch die flexible Gestaltung der Federarme 102, 104 werden diese beim Schließen des Schaltorgans 86 nicht beschädigt, so dass der Schließer 86 prinzipiell reversibel arbeitet: Bei abnehmendem Innendruck im Schutzgehäuse 54 nimmt das Schaltorgan 86 wieder seine in Fig. 2 wiedergegebene Grundposition ein.

Die Wölbung der Deckelplatte 62, die zu einer Betätigung des Schaltorgans 86 führt, beträgt in der Regel weniger als 300 µm, wobei das Schutzgehäuse 54 beispielsweise einen Außendurchmesser von etwa 18 mm bei einer Höhe von weniger als 5,5 mm, gemessen von der Bodenplatte 66 bis zur Deckelplatte 62, aufweist.

Die Fig. 5 zeigt eine zweite Ausführungsform einer elektrochemischen Sekundärzelle, welche ein Schutzgehäuse 116 mit becherförmigem einteiligem Boden 118 aus einem elektrisch leitfähigen Material besitzt. Das Schutzgehäuse 116 wird von einem ebenfalls elektrisch leitfähigen Deckel 120 abgeschlossen, wobei zwischen dem Deckel 120 und dem Boden 118 ein Isolierring 122 aus Oxidkeramik eingelötet ist. Der Isolierring 122, dessen Innendurchmesser kleiner ist als derjenige der Seitenwand des Bodens 118, trägt elektrisch gegeneinander isoliert an seiner Unterseite eine Membran 138 und an seiner Oberseite eine Kontaktmembran 134. Beide Membranen 134 und 138 sind aus elektrisch leitfähigem Material gefertigt, wobei die Kontaktmembran 134 mit ihrer Oberseite gegenüber dem benachbart angeordneten Deckel 120 mittels einer Isolierschicht 148 elektrisch isoliert und über eine Metallisierung 132, eine Durchkontaktierung 130 und eine Lötschicht 128 elektrisch leitend mit dem Boden 118 verbunden ist. Die Elektroden 2 und 4, der Separator 6 und der Elektrolyt 12 sind vom Boden 118, der Unterseite des Isolierrings 122 und der Membran 138 hermetisch dicht umschlossen, und die positive Elektrode 2 wird von einer elektrisch isolierenden, ringförmigen Aufnahme 124, die zwischen der Seitenwand des Bodens 118 und der positiven Elektrode 2 im Bereich zwischen dem Separator 6 und der Unterseite des Isolierrings 122 positioniert ist, im Schutzgehäuse 116 dergestalt zentriert, dass kein elektrischer Kontakt zwischen der Seitenwand des Bodens 118 und der positiven Elektrode 2 möglich ist. Eine Aussparung 140 in der Aufnahme 124 erleichtert die Verlegung der Kontaktlasche 68, mittels der die positive Elektrode 2 mit der Unterseite der Membran 138 elektrisch kontaktiert ist. Eine Metallisierung 142 an der Unterseite des Isolierrings 122, eine Durchkontaktierung 144 durch den Isolierring 122 sowie eine Lötschicht 146 schließen die elektrische Verbindung zwischen der Membran 138 und dem Deckel 120, mit dem seinerseits ein elektrischer Anschluss 152 kontaktiert ist. Ein elektrischer Anschluss 150 an der äußeren Seitenwand des Bodens 118 ist über den Boden 118 und die an der inneren Seitenwand des Bodens 118 angeschlossene Kontaktlasche 70 mit der negativen Elektrode 4 elektrisch verbunden.

Während also die Membran 138 mit der positiven Elektrode 2 in Verbindung steht, ist die von der Membran 138 in einem der Dicke des Isolierrings 122 entsprechenden Abstand befindliche Kontaktmembran 134 mit der negativen Elektrode 4 kontaktiert. Dieser Abstand ist so bemessen, dass bei einem unzulässigen Betriebszustand der elektrochemischen Sekundärzelle der als Detektororgan fungierenden Membran 138 eine Wölbung aufgeprägt wird, die ausreicht, mit der Kontaktmembran 134 in elektrisch leitenden Kontakt zu gelangen, so dass die elektrochemische Sekundärzelle elektrisch kurzgeschlossen wird. Ferner kann ein Abschnitt der Lötverbindung 146 als Schmelzsicherung dimensioniert sein, die irreversibel durchbrennt, falls ein Nachlade- oder ein Entladestrom einen vorgegebenen Grenzwert überschreitet. Eine weitere Energiezuführ und -abgabe über die Anschlüsse 150, 152 ist damit unterbunden.

Bei der in Fig. 5 gezeigten Ausführungsform der elektrochemischen Sekundärzelle dient die Kombination von Membran 138 und Kontaktmembran 134 als reversibel arbeitendes Schaltorgan, das als Schließer ausgebildet ist und mechanisch vom Detektororgan 138 betätigt wird. Da die beiden Anschlüsse 150, 152 von einem biokompatiblen Isoliermantel 149 umgeben sind und ein biokompatibles Polymer 153, beispielsweise Silikon, das Schutzgehäuse 116 sowie die gehäuseseitigen Enden der Anschlüsse 150, 152 umhüllt, kann das Schutzgehäuse 116 unmittelbar implantiert werden. Die gesamte in Fig. 5 dargestellte Einheit kann als Energieversorgungsmodul eingesetzt werden, dessen Anschlüsse 150, 152 über ein Koppelorgan vorzugsweise lösbar elektrisch mit weiteren Komponenten der implantierbaren Vorrichtung verbunden sind, wie dies auch in der nicht vorveröffentlichten EP-A-0 982 784 beschrieben ist.

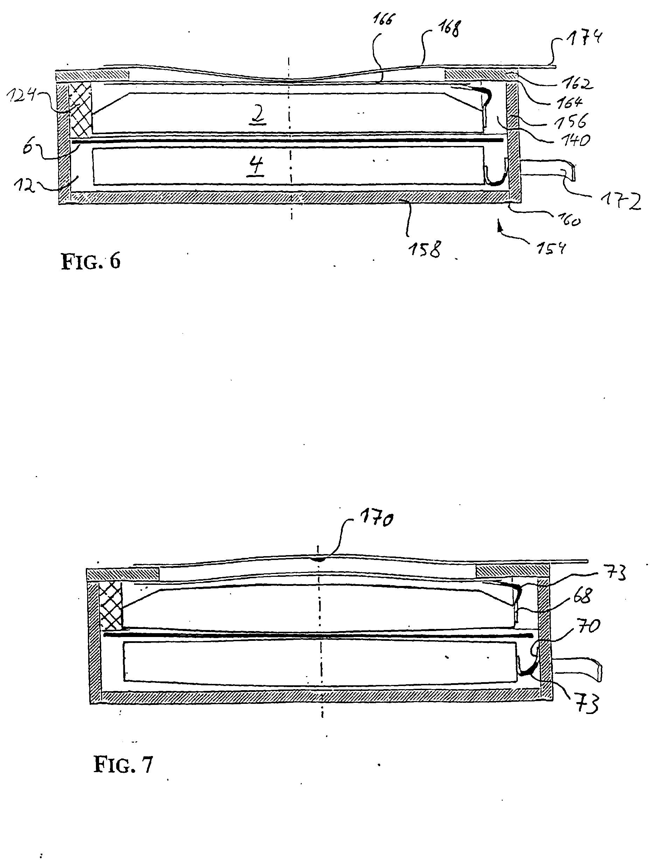

Entsprechend den Fign. 6 und 7 hat eine dritte Ausführungsform einer elektrochemischen Sekundärzelle ein Schutzgehäuse 154, dessen elektrisch leitfähiger Boden eine Seitenwand 156 in der Form eines Rohrabschnitts aufweist, die stirnseitig von einer Bodenplatte 158 verschlossen ist. Eine umlaufend geschlossene Schweißnaht 160 verbindet die Bodenplatte 158 mit der Seitenwand 156. An der zweiten Stirnseite der Seitenwand 156 ist über eine Lötschicht 164 ein keramischer Isolierring 162 festgelegt, der einen runden Durchbruch mit einem Innendurchmesser besitzt, der kleiner ist als der Innendurchmesser der Seitenwand 156, wobei auf einer in Richtung auf die Bodenplatte 158 weisenden Unterseite des Isolierrings 162 eine den Durchbruch überspannende Membran 166 aus elektrisch leitfähigem Material angebracht ist und ein hermetisch dichter Innenraum entsteht. In diesem Innenraum ist die positive Elektrode 2 über die Aufnahme 124 dergestalt aufgenommen, dass ein elektrischer Kontakt zwischen der positiven Elektrode 2 und der Seitenwand 156 ausgeschlossen ist und erstere gleichzeitig im Schutzgehäuse 154 zentriert wird. Während die positive Elektrode 2 mittels der Kontaktlasche 68 von unten mit der Membran 166 elektrisch kontaktiert ist, bildet die Kontaktlasche 70 einen elektrischen Kontakt zwischen der negativen Elektrode 4 und der Seitenwand 156. Eine elektrisch leitende Kontaktmembran 168 mit zentralem, nach unten weisendem Kontaktpunkt 170 ist an der Oberseite des Isolierrings 162 mit diesem verbunden und überspannt dessen Durchbruch. Die Kontaktmembran 168 ist nach innen in Richtung auf die Membran 166 federnd vorgewölbt und steht mittels des Kontaktpunkts 170 in elektrischem Kontakt mit der Membran 166. In dieser Position der Kontaktmembran 168 kann eine Energiezufuhr und -abgabe zu bzw. von der elektrochemischen Sekundärzelle über einen mit der Kontaktmembran 168 elektrisch verbundenen Anschluss 174 und einen mit der Außenseite der Seitenwand 156 kontaktierten Anschluss 172 erfolgen. Kommt es zu einem unzulässigen Betriebszustand der elektrochemischen Sekundärzelle, wird die Membran 166 und mit dieser die Kontaktmembran 168 so weit nach außen gewölbt, dass die Kontaktmembran 168 über eine labile Gleichgewichtslage hinaus nach außen umspringt und der elektrische Kontakt zwischen den beiden Membranen 166, 168 auch unterbrochen bleibt, wenn die Membran 166 wieder in ihre Ausgangsposition gemäß Fig. 6 zurückgelangen sollte.

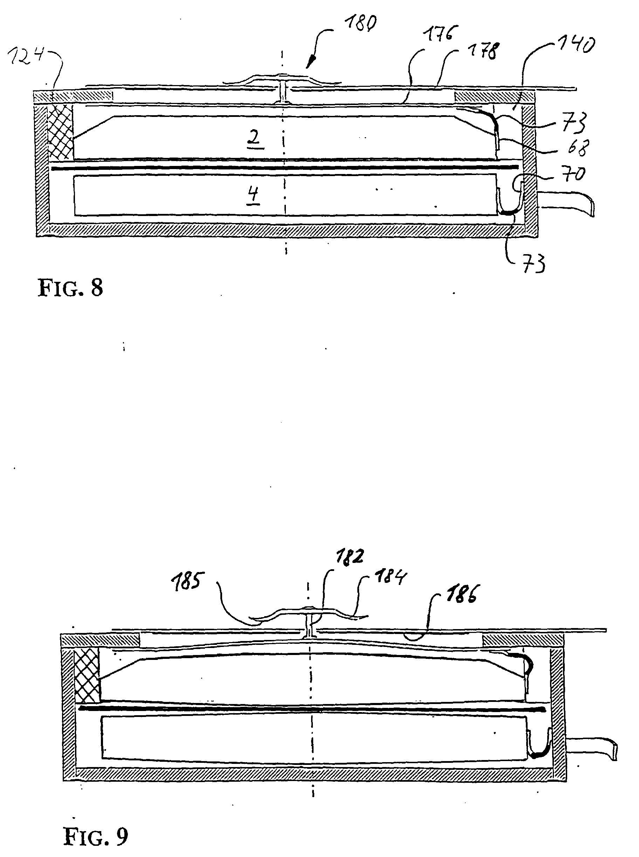

Eine vierte Ausführungsform einer in den Fign. 8 und 9 veranschaulichten elektrochemischen Sekundärzelle weist ein Schutzgehäuse auf, welches sich von dem Schutzgehäuse 154 im Wesentlichen nur durch die Ausgestaltung der Membranen 166, 168 und ihrer elektrischen Kontaktierung unterscheidet. Eine der Membran 166 entsprechende Membran 176 trägt zentral an ihrer Oberseite eine insgesamt mit 180 bezeichnete Kontaktfeder mit einem Stift 182 und einem Federteller 184. Der zylindrische Stift 182 ist mit einer Stirnseite an der Membran 182, auf welcher er mit seiner Längsachse etwa senkrecht steht, festgelegt und mit seiner zweiten Stirnseite mit dem Federteller 184 verbunden. Dabei durchsetzt der Stift 182 einen Durchbruch in einer Kontaktmembran 178, die der Kontaktmembran 168 des Schutzgehäuses 154 entspricht, wobei der Federteller 184 in einer Grundposition gemäß Fig. 8 mit einer in der Nähe seines Außenrandes befindlichen, der Oberseite der Kontaktmembran 178 zugewandten Kontaktfläche 185 mit der Kontaktmembran 178 in elektrisch leitfähigem Kontakt steht. In der Grundposition verlaufen die Membranen 176, 178 etwa parallel, und die Kontaktfläche 185 liegt federnd vorgespannt an der Kontaktmembran 178 auf. Bei einem unzulässigen Betriebszustand der elektrochemischen Sekundärzelle wird der Membran 176 eine Wölbung nach außen in Richtung auf die Kontaktmembran 178 aufgezwungen, die sich im Wesentlichen nicht verformt und ihre Lage beibehält. Die Wölbung der Membran 176 reicht dabei aus, die Kontaktfläche 185 von der Kontaktmembran 178 abzuheben und den elektrischen Kontakt reversibel zu unterbrechen, ist aber nicht so groß, dass die Oberseite der Membran 176 mit der Unterseite der Kontaktmembran 178 in Kontakt kommt. Um letzteres auch bei noch stärkerer Wölbung der Membran 176 zu gewährleisten, ist die Unterseite der Kontaktmembran 178 mit einer Isolierschicht 186 versehen.

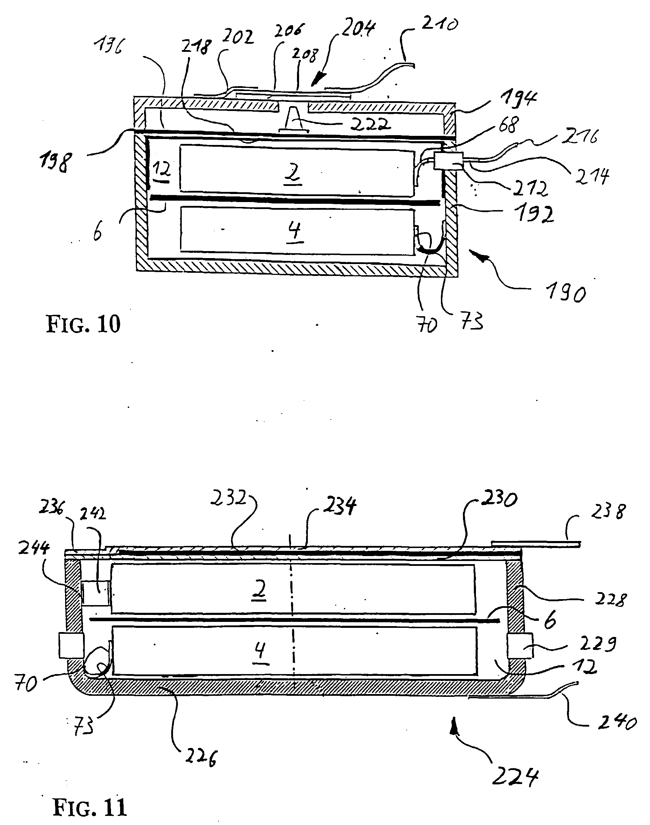

Eine fünfte Ausführungsform einer elektrochemischen Sekundärzelle gemäß Fig. 10 umfasst ein Schutzgehäuse 190 mit einem einteiligen becherförmigen Boden 192, einem ebenfalls becherförmigen Deckel 194 und einer Membran 196, die mittels einer Schweißverbindung 198 an den einander zugewandten Stirnseiten des Bodens 192 und des Deckels 194 mit diesen verbunden ist, wobei der Boden 192, der Deckel 194 und die Membran 196 vorzugsweise aus dem gleichen elektrisch leitenden Werkstoff bestehen. Die Membran 196 unterteilt das Schutzgehäuse 190 horizontal in einen oberen Deckelbereich und einen unteren, hermetisch dichten Raum, der die positive und die negative Elektrode 2 bzw. 4, den Separator 6 und den Elektrolyten 12 aufnimmt. Die negative Elektrode 4 ist mittels der Kontaktlasche 70 mit dem Boden 192 kontaktiert, dessen Seitenwand eine einpolige Durchführung 214 über ein keramisches Substrat 212 hermetisch dicht und mit Bezug auf die Seitenwand des Bodens 192 elektrisch isoliert aufnimmt. Die Kontaktlasche 68 stellt den elektrischen Kontakt zwischen der positiven Elektrode 2 und einem in den hermetisch dichten Raum des Schutzgehäuses 190 ragenden Ende der Durchführung 214 her, deren anderes Ende die Seitenwand des Bodens 192 nach Außen überragt und mit einem Anschluss 216 elektrisch verbunden ist.

Auf der der positiven Elektrode 2 zugewandten Unterseite der Membran 196 sowie an der zu dieser Elektrode benachbart liegenden Innenfläche der Seitenwand des Bodens 192 ist zur Vermeidung eines elektrischen Kontakts zwischen der Membran 196 bzw. der Seitenwand des Bodens 192 und der positiven Elektrode 2 eine Isolierschicht 218 aufgebracht. Auf der Oberseite der Membran 196 befindet sich im Zentrum ein Stößel 222, der in einen Durchbruch im Deckel 194 hineinragt. In geringem Abstand oberhalb einer Oberkante des Stößels 222 ist ein insgesamt mit 204 bezeichnetes, den Durchbruch überspannendes Berstelement angeordnet. Dieses umfasst auf seiner der Oberseite des Deckels 194 zugewandten Seite ein Substrat 206 mit einer Leitschicht 208. Bei dem Substrat 206 kann es sich um eine Keramik, beispielsweise Oxidkeramik, ein Glas oder dergleichen handeln. Die Leitschicht 208 ist auf einer Seite des Durchbruchs im Deckel 194 mit diesem über eine Kontaktlasche 202 kontaktiert und auf einer gegenüberliegenden Seite des Durchbruchs mit einem Anschluss 210 versehen, der auf dieses Weise mit der negativen Elektrode 4 elektrisch verbunden ist.

Bei einem unzulässigen Betriebszustand der elektrochemischen Sekundärzelle wird der Membran 196 ― sei es durch Volumenzunahme der Elektroden 2, 4 und/oder Temperaturanstieg und/oder Gasentwicklung beim Betrieb der elektrochemischen Sekundärzelle ― eine Wölbung aufgeprägt, die ausreicht, dass der Stößel 222 das Berstelement 204 zerstört, so dass die Leitschicht 208 zwischen der Kontaktlasche 202 und dem Anschluss 210 irreversibel unterbrochen wird.

Wie in Fig. 11 gezeigt wird, weist eine sechste Ausführungsform einer elektrochemischen Sekundärzelle ein Schutzgehäuse 224 mit einem flachen, elektrisch leitfähigen schalenförmigen Boden 226 auf, der über seine nach oben zeigende Stirnfläche unter Zwischenschaltung eines keramischen Isolierrings 229 mit einer Seitenwand 228 verbunden ist, welche die Form eines Rohrabschnitts besitzt. Die Seitenwand 228 ist an ihrer oberen Stirnseite mit einer elektrisch leitfähigen Membran 230 hermetisch dicht abgeschlossen. Auf der nach oben weisenden äußeren Seite der Membran 230 ist eine Isolierschicht 232 und auf dieser eine elektrisch leitende, spröde berstende Berstschicht 234 aufgebracht. Die Berstschicht 234 ist im Bereich der Seitenwand 228 an einer ersten Stelle über eine Kontaktierung 236 elektrisch leitend mit der Membran 230 und an einer zweiten, diametral gegenüberliegenden Stelle mit einem Anschluss 238 verbunden, wobei die Berstschicht 234 sich zwischen diesen beiden Stellen streifenförmig erstreckt. Über den Anschluss 238 wird die positiven Elektrode 2 von außerhalb des Schutzgehäuses 224 abgegriffen, zu welchem Zweck die positive Elektrode 2 mittels einer Kontaktlasche 242 kontaktiert ist, welche letztere über eine Schweißverbindung 244 den elektrischen Kontakt mit der Innenseite der Seitenwand 228 bildet. Die negative Elektrode 4 steht über die Kontaktlasche 70 mit der Innenseite des Bodens 226 in Verbindung und ist von außerhalb des Schutzgehäuses 224 mittels eines Anschlusses 240 abzugreifen. Es versteht sich, dass alternativ zu der Schweißverbindung 244 auch zum Beispiel eine Lötverbindung vorgesehen sein kann. Bei einem unzulässigen Betriebszustand der elektrochemischen Sekundärzelle wird der Membran 230 eine Wölbung aufgezwungen, welche die Berstschicht 234 irreversibel zerstört und somit die elektrische Verbindung zwischen der positiven Elektrode 2 und dem Anschluss 238 unterbricht.

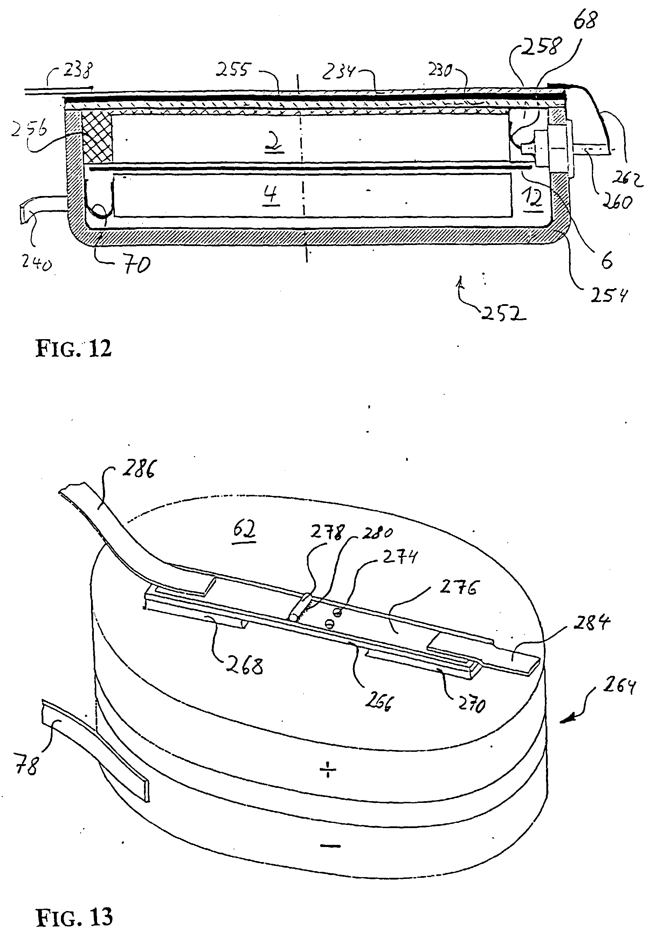

Eine siebte Ausführungsform einer elektrochemischen Sekundärzelle ist in Fig. 12 wiedergegeben und umfasst ein Schutzgehäuse 252, welches sich vom Schutzgehäuse 224 im Wesentlichen nur durch die Ausgestaltung des Bodens 226 und derjenigen des Strompfads zu bzw. von der positiven Elektrode 2 unterscheidet. Das Schutzgehäuse 252 besitzt einen Boden 254, dessen Seitenwände bis an die Membran 230 geführt und mit dieser hermetisch dicht und elektrisch leitend verschweißt sind, so dass der Isolierring 229 des Schutzgehäuses 224 entfällt. Die positive Elektrode 2 ist in einer becherförmigen, elektrisch isolierenden Aufnahme 256 aufgenommen, welche die positive Elektrode 2 mit Bezug auf die Seitenwand des Bodens 254 und die Membran 230 elektrisch isoliert sowie in vorbestimmter Position hält. Die Kontaktlasche 68 ist im Bereich einer Aussparung 258 der Aufnahme 256 plaziert und dient der Kontaktierung der positiven Elektrode 2 mit einem ersten Ende einer hermetisch dicht und elektrisch isoliert in der Seitenwand des Bodens 254 aufgenommenen einpoligen Durchführung 260. Ein zweites Ende der Durchführung 260 überragt die Außenseite der Seitenwand des Bodens 254 und ist über eine Kontaktlasche 262 in elektrische Verbindung mit der elektrisch leitenden Berstschicht 234 gebracht, die durch eine Isolierschicht 255 vollständig gegenüber der Membran 230 und dem Boden 254 isoliert ist.

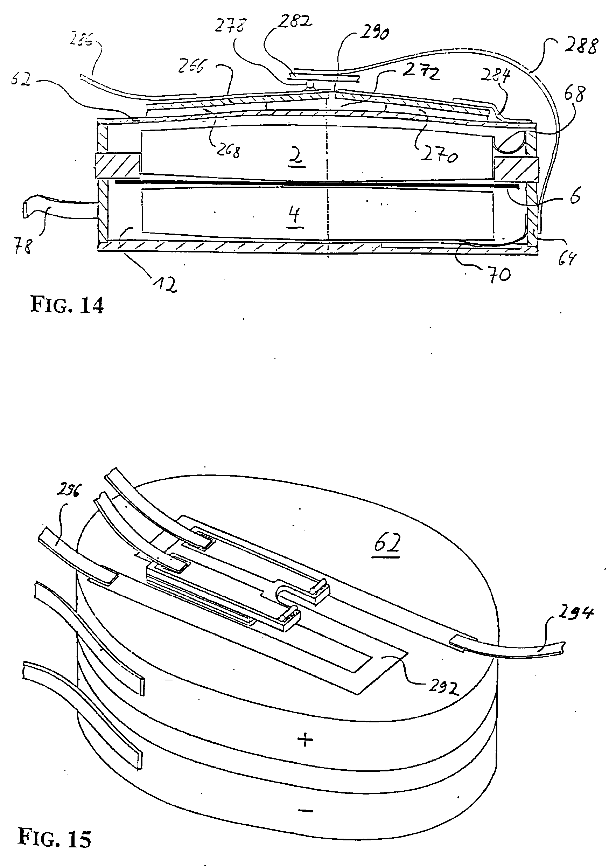

Entsprechend den Fign. 13 und 14 verwendet eine achte Ausführungsform einer elektrochemischen Sekundärzelle ein abgewandeltes Schutzgehäuse 264, welches weitestgehend dem Schutzgehäuse 54 der Fign. 2 bis 4 entspricht, jedoch nicht dessen Schaltorgan 86 benutzt, und bei dem der Strompfad von bzw. zu der positiven Elektrode 2 in abgeänderter Form realisiert ist. Ein rechteckiger Berststreifen 266 ist über Klebverbindungen 268 und 270 jeweils etwa im äußeren Drittel seiner längeren Seite an der Deckelplatte 62 des Schutzgehäuses 264 in vorgegebenem Abstand von außen angekoppelt, so dass zwischen den Klebverbindungen 268 und 270 eine Überbrückungszone 272 entsteht. Eine Symmetrielinie in Richtung der längeren Seite des Berststreifens 266 verläuft dabei im Wesentlichen parallel zu einer Mittelpunktslinie der runden Deckelplatte 62, und ein Zentrum der Überbrückungszone 272 befindet sich oberhalb des Mittelpunkts der Deckelplatte 62. Auf einer Oberseite des Berststreifens 266 ist eine Leitschicht 276 aufgebracht, die sich über nahezu die gesamte Oberseite des Berststreifens 266 erstreckt und die im Bereich der einen kurzen Seite des Berstreifens mittels einer Kontaktlasche 284 mit der Deckelplatte 62 und im Bereich der anderen kurzen Seite mit einem Anschluss 286 kontaktiert ist. Somit ist eine elektrische Verbindung zwischen dem Anschluss 286 und der positiven Elektrode 2 hergestellt.

Im Bereich der klebschichtfreien Überbrückungszone 272 ist nahe einer Seitenhalbierenden der längeren Seite des Berststreifens 266 in diesem eine Sollbruchstelle in Form einer Perforation 274 vorgesehen. Die Sollbruchstelle kann dabei natürlich auch auf andere geeignete Weise, beispielsweise durch Kerben, Ritzen oder Verjüngen des Berststreifens 266, erzeugt werden. Benachbart zur Perforation 274 ist mittels einer Lötverbindung 280 ein Drahtabschnitt als Kurzschlusskontakt 278 fixiert, über dem in vorgegebenem Abstand ein Gegenkontakt 282 steht. Der Gegenkontakt 282 steht über eine Kontaktlasche 288 mit der Seitenwand 64, d.h., mit der negativen Elektrode 4, in elektrischem Kontakt. Bei einem unzulässigen Betriebszustand der elektrochemischen Sekundärzelle wird der Deckelplatte 62 als wölbbaren Membran eine Wölbung aufgeprägt, die sich über die Klebverbindungen 268, 270 auf den Berststreifen 266 überträgt, der gemäß Fig. 14 entlang der Perforation 274 bricht. Der Kurzschlusskontakt 278 wird gegen den Gegenkontakt 282 gedrückt, und der Kurzschlussstrom zwischen der positiven und der negativen Elektrode 2 bzw. 4 genügt, ein evtl. verbleibendes Leitschichtfragment 290, welches die Bruchstelle zumindest teilweise überspannt, durchzubrennen. Dadurch ist der Strompfad zwischen der positiven Elektrode 2 und dem Anschluss 286 irreversibel unterbrochen.

Da es notwendig ist, die zum Bruch des Berststreifens 266 erforderliche Wölbung im Bereich einiger hundert µm, vorzugsweise im Bereich von weniger als 200 µm, vorherzusagen, muss die vorbestimmte Geometrie des Berststreifens 266 sehr genau eingehalten werden. Als Material für den Berststreifen 266 kommt beispielsweise Glas oder Keramik in Betracht, wobei es vorteilhaft sein kann, dem Berststreifen 266 eine mechanische Vorspannung aufzuprägen, die den Abstand der Bruchufer nach dem Bersten der Sollbruchstelle vergrößert. Hierzu kann der Berststreifen 266 als Verbundelement aus wenigstens einem Glas- oder Keramikwerkstoff und wenigstens einem Metall ausgeführt werden, die miteinander verklebt oder verlötet sind. Eine Vorspannung des Berststreifens 266 kann ebenfalls durch Verwendung eines Metalls mit Formgedächtnis (Memory-Effekt) induziert werden.

Es ist ferner möglich, den Berststreifen 266 aus einem piezoelektrischen Material herzustellen oder zumindest mit einer derartigen Schicht zu versehen. Bei Verformungen des Berststreifens 266, die nicht zu dessen Bruch führen, also noch keinen unzulässigen Betriebszustand der elektrochemischen Sekundärzelle signalisieren, können von dem piezoelektrischem Wandler gelieferte elektrische Informationen in Form von Ladungsänderungen von der optionalen Auswerteelektronik 52 abgegriffen werden, um beispielsweise ein dem Öffner 48 oder 50 der Fig. 1 entsprechendes Schaltorgan zu betätigen und ein Nachladen bzw. Entladen der Elektroden 2, 4 der elektrochemischen Sekundärzelle zu unterbrechen, bevor die elektrochemische Sekundärzelle einen unzulässigen Betriebszustand erreicht.

Bei der Ausführungsform gemäß den Fign. 13 und 14 ist denkbar, die Lage der Perforation 274 und des Kurzschlusskontaktes 278 mit Bezug zur Seitenhalbierenden der längeren Seite des Berststreifens 266 gegeneinander zu vertauschen, so dass der Kurzschlusskontakt 278 auf der in Fig. 14 rechten Seite des Bruchufers zu liegen kommt. In diesem Fall kann ein Kurzschlussstrom zwar ein eventuell verbleibendes Leitschichtfragment 290 nicht durchbrennen, wohl aber die elektrochemischen Sekundärzelle gewollt vollständig entladen, wobei dann die Kontaktlasche 68 und/oder 70 nicht als Schmelzsicherung auszulegen wären, wie dies grundsätzlich möglich ist (vgl. entsprechende Ausführungen zum Schutzgehäuse 54 der Fign. 2 bis 4). Ist eine mehrfach redundante Absicherung nicht erforderlich, ist es ferner denkbar, auf den Kurzschlusskontakt 278 und den Gegenkontakt 282 komplett zu verzichten, nur die irreversible Öffnerfunktion des Berststreifens 266 auszunutzen und diesen so auszulegen, dass in jedem Fall sichergestellt ist, dass beim Bruch des Bertstreifens 266 kein Leitschichtfragment 290 verbleibt.

Eine neunte Ausführungsform einer elektrochemischen Sekundärzelle ist in Fig. 15 gezeigt und unterscheidet sich von der Ausführungsform der Fign. 2 bis 4 im Wesentlichen nur dadurch, dass zur Erhöhung der Redundanz ein Dehnungsmessstreifen 292 mäanderförmig auf der Oberseite der Deckelplatte 62 aufgebracht ist. Der Dehnungsmessstreifen 292 erfährt bei Wölbung der Deckelplatte 62 eine Formänderung, die zu einer Änderung seines elektrischen Widerstandes führt, der über Anschlüsse 294 und 296 von der Auswerteelektronik 52 erfasst und beispielsweise zur Betätigung weiterer Schaltorgane verwendet wird, etwa für einen elektrisch betätigbaren Schließer, der vom Schutzgehäuse entfernt plaziert sein kann und in der Funktion dem Schließer 46 oder dem Öffner 50 der Fig. 1 entspricht. Die Auswerteelektronik 52 kann ferner eine nicht gezeigte Warneinrichtung aktivieren, die einen Benutzer über die Fehlfunktion der elektrochemischen Sekundärzelle in Kenntnis setzt.

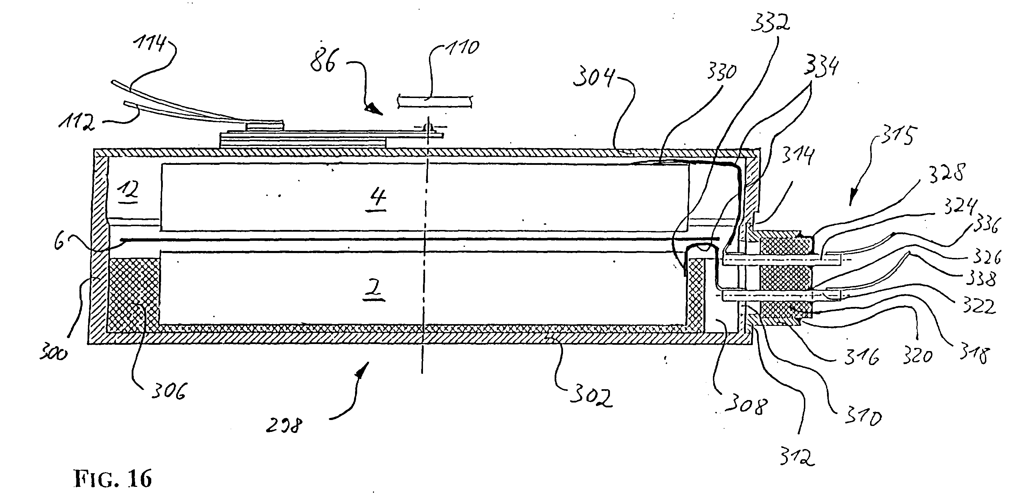

Ein in Fig. 16 wiedergegebenes Schutzgehäuse 298 umfasst das bereits im Zusammenhang mit dem Schutzgehäuse 54 der Fign. 2 bis 4 beschriebene Schaltorgan 86 und unterscheidet sich vom Schutzgehäuse 54 im Wesentlichen nur durch folgende Gestaltungsmerkmale: Ein metallischer, vorzugsweise aus Titan gefertigter Boden ist becherförmig ausgestaltet, wobei eine hohlzylindrische Seitenwand 300 an ihrer unteren Stirnseite einstückig mittels einer Bodenplatte 302 verschlossen ist. An einer oberen Stirnseite der Seitenwand 300 ist eine als wölbbare Membran ausgebildete Deckelplatte 304 hermetisch dicht angeschweißt, welche ebenfalls bevorzugt in Titan ausgeführt ist. Eine becherförmige Aufnahme 306 ist im Inneren des Schutzgehäuses 298 dergestalt aufgenommen, dass ihre zylindrische Seitenwand einen dem Innendurchmesser der Seitenwand 300 entsprechenden Außendurchmesser hat und ihre Bodenplatte auf der Bodenplatte 302 aufliegt. Die Innenkontur der Aufnahme 306 ist der Außenkontur der positiven Elektrode 2 angepasst, wobei letztere fixiert und in radialer Richtung innerhalb des Schutzgehäuses 298 zentriert wird. Die Aufnahme 306 besteht ― ebenso wie die bereits beschriebenen Aufnahmen 124 (Fign. 5 bis 9) und 256 (Fig. 12) ― aus einem elektrisch isolierenden Werkstoff, und zwar vorzugsweise aus einem Kunststoffmaterial wie z.B. Polytetrafluorethylen (PTFE), und isoliert die positive Elektrode 2 mit Bezug auf die metallischen Außenwände des Schutzgehäuses 298. Die Aufnahme 306 ist an der Außenseite ihrer Seitenwand mit einer Aussparung 308 versehen und so in das Schutzgehäuse 298 eingelegt, das die Aussparung 308 einem in radialer Richtung in der Seitenwand 300 eingebrachten Durchbruch 310 zugewandt ist.

Der zylindrische Durchbruch 310 in der Seitenwand 300 ist an der Außenseite der Seitenwand 300 von einer zylindrischen Planfläche 312 umgeben, in die eine nach außen weisende Schulter 314 einer buchsenförmigen, metallischen, vorzugsweise aus Titan gefertigten Aufnahme 316 eingepasst und hermetisch dicht verschweißt ist. In der Aufnahme 316 ist ein elektrisch isolierender, anorganischnichtmetallischer Gehäuseabschnitt des Schutzgehäuses 298 in Form eines keramischen Substrats 318, beispielsweise aus Al₂O₃, dergestalt aufgenommen, dass das Substrat 318 mit seinem Außendurchmesser dem Innendurchmesser der Aufnahme 316 angepasst und bis zu einem Bund an der Innenwand der Aufnahme 316 in diese eingesetzt ist, der sich in axialer Richtung auf der der Schulter 314 zugewandten Seite der Aufnahme 316 befindet. Auf der gegenüberliegenden Seite überragt das Substrat 318 die Aufnahme 316 und ist mit dieser über eine Goldlötverbindung 320 hermetisch dicht verbunden. Das Substrat 318 nimmt seinerseits eine zweipolige Durchführung 315 auf, die zwei metallische Kontaktstifte 322 und 324 umfasst, welche letztere vorzugsweise aus einer Platin-Iridium-Verbindung bestehen und je einen Pol der zweipoligen Durchführung 315 bilden. Die Kontaktstifte 322 und 324, die in Fig. 16 in einer um 90° um die Achse der Aufnahme 316 gedrehten Lage gezeigt sind, durchsetzen das Substrat 318 in axialer Richtung und sind in diesem in gleicher Weise mittels einer Goldlötverbindung 326 hermetisch dicht festgelegt. Sie besitzen eine Länge, die ausreicht, die Stirnseite der Schulter 314 sowie diejenige des Substrats 318 axial zu überragen, wobei die Kontaktstifte 322 und 324 auf der dem Inneren des Schutzgehäuses 298 zugewandten Seite in die Aussparung 308 hineinstehen. Der Stift 322 ist über eine Kontaktlasche 332 mit der positiven Elektrode 2 kontaktiert, und eine Kontaktlasche 330 bildet einen Strompfad zwischen der negativen Elektrode 4 und dem Kontaktstift 324. Beide Kontaktlaschen 330 und 332 sind jeweils mit einem Isolationsschlauch 334 umgeben. Um die metallischen Gehäuseabschnitte (d.h. die Seitenwand 300, die Bodenplatte 302, die Deckelplatte 304 und die Aufnahme 316) des Schutzgehäuses 298 definiert auf das Potential der negativen Elektrode 4 zu legen, weist die Durchführung 315 eine Lötbrücke 328 auf, die sich zwischen dem Kontaktstift 324 und der Aufnahme 316 erstreckt. Außerhalb des Schutzgehäuses 298 werden die positive Elektrode 2 und die negative Elektrode 4 jeweils über einen Anschluss 338 bzw. 336 abgegriffen.

Das Schutzgehäuse 298 lässt sich im Vergleich zum Schutzgehäuse 54 mit geringerem Aufwand fertigen, da der Boden des Schutzgehäuses 298 einstückig ausgeführt ist und kein keramischer Isolationsring 80 verwendet wird. Der besonders kritische Metall-Keramik-Übergang ist auf ein Minimum reduziert und auf ein separat zu fertigendes und zu prüfendes Teil beschränkt, welches die Komponenten 316, 318, 322 sowie 324 umfasst. Dies trägt wesentlich zu einer erhöhten Druckfestigkeit des Schutzgehäuses 298 bei.

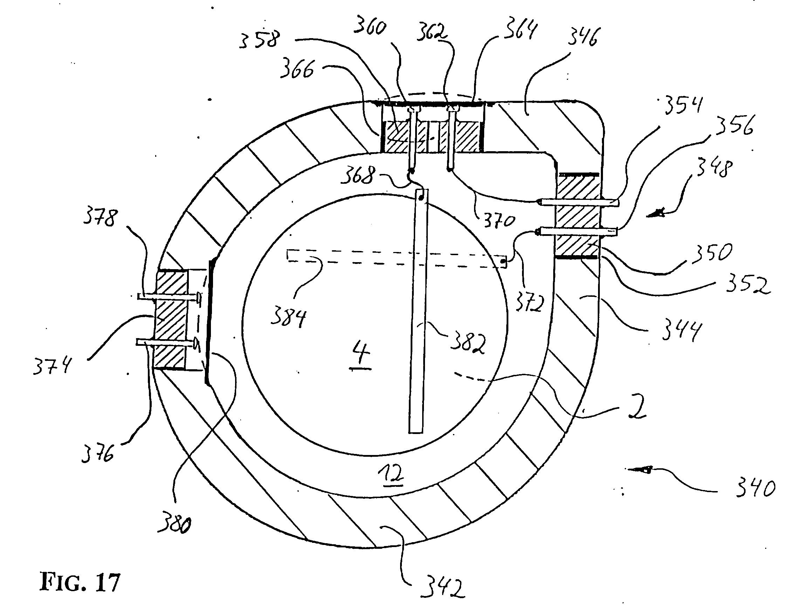

Wie aus Fig. 17 hervorgeht, kann ein Schutzgehäuse 340 in Richtung seiner kleinsten Ausdehnung gesehen statt einer zylindrischen auch eine andere, beispielsweise eine etwa tropfenförmige Querschnittsform haben. In der Ausführungsform des Schutzgehäuses 340 gemäß Fig. 17 wird die Seitenwand von einem Segment 342 in Form eines Dreiviertelkreises sowie zwei sich tangential zu beiden Seiten des Dreiviertelkreises anschließenden linearen Segmenten 344 und 346 gebildet, wobei letztere sich über eine zwischen ihnen liegende Abrundung schließen. Die Seitenwand ist metallisch, vorzugsweise in Titan ausgeführt und bildet zusammen mit einer einstückigen Bodenplatte einen becherförmigen Boden. Eine nicht gezeigte, ebenfalls vorzugsweise aus Titan gefertigte Deckelplatte ist mit der oberen Stirnseite der Seitenwand hermetisch dicht verschweißt. Der Übersichtlichkeit halber ist die Wandstärke der Segmente 342, 344 und 346 vergrößert wiedergegeben. Die Elektroden 2 und 4 sind im Inneren des Schutzgehäuses 340 durch eine nicht gezeigte Zentrieranordnung festgelegt, wobei mindestens eine der Elektroden 2 und 4 mit Bezug auf den becherförmigen Boden und die Deckelplatte vorzugsweise mittels der Zentrieranordnung elektrisch isoliert ist. Dabei kann die Zentrieranordnung eine becherförmige Aufnahme ähnlich der Aufnahme 256 (vgl. Fig. 12) oder der Aufnahme 306 (Fig. 16) umfassen, die neben der Zentrierfunktion auch die Aufgabe der elektrischen Isolierung erfüllt. Ferner kann die den Elektroden 2, 4 zugewandte Innenseite des becherförmigen Bodens und/oder der Deckelplatte mit einer Isolierschicht versehen sein.

Eine insgesamt mit 348 bezeichnete Durchführung ist zweipolig ausgebildet, wobei im Unterschied zur Ausgestaltung gemäß Fig. 16 auf die dort verwendete Aufnahme 316 verzichtet wird, so dass ein keramisches Substrat 350 nicht in einer Aufnahme sondern direkt in die Seitenwand des Schutzgehäuses 340 hermetisch dicht eingelötet ist, wozu vorzugsweise Goldlot verwendet wird. Das keramische Substrat 350 ist in das lineare Segment 344 eingelötet, es ist aber ebenso möglich, ersteres in dem Kreissegment 342 unterzubringen. Metallische Kontaktstifte 354 und 356, die jeweils einen Pol der zweipoligen Durchführung 348 bilden, sind im keramischen Substrat 352 hermetisch dicht eingelötet und dienen der getrennten Durchführung eines Strompfads von bzw. zu den beiden Elektroden 2 und 4 durch die Wand des Segments 344. Hinsichtlich der bevorzugten Materialwahl für die Kontaktstifte 354, 356 sowie das Substrat 350 sei auf die Ausführungen zur Durchführung 315 verwiesen. Auch bei der Durchführung 348 kann eine der Lötbrücke 328 (siehe Fig. 16) ähnliche elektrische Verbindung zwischen dem Kontaktstift 354 oder 356 und dem Segment 344 vorgesehen sein, um das Gehäuse definiert auf negatives bzw. positives Potential zu legen. Vorzugsweise wird das Gehäuse elektrisch leitend mit der negativen Elektrode 4 verbunden und die positive Elektrode 2 mit Bezug auf das Gehäuse isoliert.

Ein zylindrischer Durchbruch im Segment 346 nimmt mittels einer Lötverbindung ein keramisches Substrat 358 auf, welches von zwei Kontaktstiften 360 und 362 durchsetzt ist, die im Substrat 358 über eine Lötverbindung aufgenommen sind und dieses axial beidseitig überragen. Der Durchbruch im Segment 346 ist auf der Außenseite durch eine metallische Membran 364 hermetisch dicht verschlossen, wobei die Membran 364 im Grundzustand, d.h. bei nicht unzulässig erhöhtem Druck im Inneren des Schutzgehäuses 340, mit ihrer auf das Innere des Schutzgehäuses 340 weisenden Innenseite auf den Kontaktstiften 360 und 362 mit definierter Vorspannung anliegt und diese elektrisch verbindet. Die als Detektororgan fungierende Membran 364 befindet sich außerhalb eines die Elektroden 2 und 4 aufnehmenden Abschnitts des Schutzgehäuses 340, wobei ein im Wesentlichen in Richtung der Längsachse der Kontaktstifte 360, 362 verlaufender Durchbruch 366 im Substrat 358 eine Fluidverbindung zwischen der Membran 364 und dem die Elektroden 2 und 4 aufnehmenden Abschnitt des Schutzgehäuses 340 sicherstellt.

Während eine Kontaktlasche 372 einen an der positiven Elektrode 2 vorgesehenen Abgriff 384 direkt mit dem Kontaktstift 356 der Durchführung 348 verbindet, ist der zweite Kontaktstift 354 der Durchführung 348 unter Zwischenschaltung eines Öffners mit einem Abgriff 382 der negativen Elektrode 4 kontaktiert, wobei der Öffner ein aus den Kontaktstiften 360, 362 gebildetes Kontaktpaar sowie die Membran 364 umfasst. Dabei ist eine Kontaktlasche 368 zwischen dem Abgriff 382 und dem Kontaktstift 360 sowie eine Kontaktlasche 370 zwischen dem Kontaktstift 362 und dem Kontaktstift 354 vorgesehen.

Mittels der Membran 364 lässt sich zwar ein Quellen der Elektroden 2, 4 durch unmittelbares oder mittelbares Anliegen der Elektroden 2, 4 an der Membran 364 nicht detektieren, das Quellen der Elektroden 2 und 4 führt jedoch ebenso wie eine Gasentwicklung und/oder eine Temperaturerhöhung beim Betrieb der elektrochemischen Sekundärzelle zu einer Zunahme des Innendrucks im Schutzgehäuse 340. Wird ein einen gerade noch zulässigen Betriebszustand der elektrochemischen Sekundärzelle signalisierender vorbestimmter Druckgrenzwertes innerhalb des hermetisch dichten Schutzgehäuses 340 überschritten, wird der Membran 364, die über den Durchbruch 366 in Fluidkommunikation mit dem Innenraum des Schutzgehäuses 340 steht, eine Wölbung aufgeprägt, die ausreicht, die Membran 364 von den Kontaktstiften 360 und 362 abzuheben. Die elektrische Verbindung zwischen den beiden Kontaktstiften 360, 362, und damit zwischen der negativen Elektrode 4 und dem Kontaktstift 354 der Durchführung 348, ist dann reversibel unterbrochen.

Das Schutzgehäuse 340 weist ein weiteres Schaltorgan auf, welches in dem Kreissegment 342 integriert und als reversibler Schließer ausgebildet ist. Dieses Schaltorgan kann zusätzlich zu dem oder anstelle des oben beschriebenen Öffner(s) vorhanden sein. Eine Membran 380 ist zugleich Detektororgan und Teil des Schließers. Sie ist an der den Elektroden 2, 4 zugewandten Innenseite des Segments 342 vorgesehen und verschließt einen Durchbruch im Segment 342. Im zylindrischen Durchbruch ist ein keramisches Substrat 374 dergestalt eingelötet, das zwei das Substrat 374 axial durchsetzende Kontaktstifte 376 und 378 in der Grundstellung der Membran 380 in vorbestimmtem Abstand zu deren Außenseite stehen. Die Membran 380 ist zumindest in dem Bereich ihrer Außenseite elektrisch leitfähig ausgebildet, der den Kontaktstiften 376, 378 benachbart ist. Vorzugsweise ist jedoch die gesamte Membran 380 elektrisch leitend, insbesondere in einem mit dem Werkstoff des metallischen Bodens und der Deckelplatte des Schutzgehäuses 340 übereinstimmendem Material, ausgeführt und im Segment 342 eingeschweißt. Sie liegt in diesem Fall als Ganzes auf dem elektrischen Potential der genannten metallischen Gehäuseteile.

Die Membran 380 muss den Durchbruch im Segment 342 nicht zwangsweise hermetisch dicht verschließen. Es ist reicht aus, wenn sie hinreichend dicht ist, bei einem unzulässig hohen Druckanstieg im Inneren des Schutzgehäuses 340 eine Wölbung zu erfahren (in Fig. 17 durch eine gestrichelte Linie angedeutet), die wenigstens ihren leitfähigen Bereich in elektrischen Kontakt mit den Kontaktstiften 376 und 378 bringt und diese elektrisch kurzschließt. Die hermetische Dichtheit muss dann von dem Substrat 374 gewährleistet werden, welches mit dem Segment 342 ebenso wie mit den Kontaktstiften 376, 378 hermetisch dicht zu verlöten wäre. Ferner wäre ein zwischen dem Substrat 374 und der Membran 380 gebildeter Kompressionsraum bei der Auslegung der Membran 380 zu berücksichtigen. Verschließt hingegen die Membran 380 den Durchbruch im Segment 342 hermetisch dicht, was bevorzugt wird, ist eine hermetisch dichte Gestaltung des Substrats 374 und der entsprechenden Lötverbindungen zwischen dem Substrat 374 und den Kontaktstiften 376, 378 sowie dem Segment 342 nicht zwingend notwendig, jedoch unter Umständen sinnvoll.

Es versteht sich, dass das Schutzgehäuse 340 so ausgelegt werden kann, dass auch ein Quellen bzw. eine Volumensexpansion der Elektroden 2 und/oder 4 in Wölbungsrichtung der Membran 380, d.h. im Wesentlichen senkrecht zur kleinsten Ausdehnung des Schutzgehäuses 340, die Membran 380 betätigt, indem die Elektroden 2 und/oder 4 unmittelbar oder mittelbar z.B. über eine Isolierschicht an der Membran 380 anliegen. Bevorzugte Materialien für die Kontaktstifte 360, 362, 376, 378 und die Substrate 358 und 374 des Öffners bzw. des Schließers entsprechen denjenigen der Kontaktstifte 354 und 356 der Durchführung 348 bzw. des Substrats 350.

Der die Membran 380 und ein von den Kontaktstiften 376, 378 gebildetes Kontaktpaar umfassende Schließer des Schutzgehäuses 340 kann beispielsweise entsprechend dem Schließer 44 (siehe Fig. 1) eingesetzt werden, um den Nachladestromkreis 22 direkt kurzzuschließen. Es ist ebenso möglich, den Schließer mittels der Auswerteelektronik 52 zu überwachen, die ihrerseits andere Schaltorgane oder die bereits erwähnte Warneinrichtung betätigt.

Ein wesentlicher Vorteil des Schutzgehäuses 340 ist darin zu sehen, dass dieses durch Integration aller Detektor- und Schaltorgane sowie der Durchführung in die Seitenwand des Schutzgehäuses 340 sehr flach baut und in Richtung seiner kleinsten Ausdehnung eine Dicke aufweist, die im Wesentlichen nur um die Wandstärken des Bodens und der Deckelplatte größer ist als diejenige des Elektroden/Elektrolytsystems.

## Patentansprüche

1. Elektrochemische Sekundärzelle mit mindestens jeweils einer ein aktives Material umfassenden positiven (2) und einer negativen (4) Elektrode, die unmittelbar in einem Gehäuse aufgenommen sind, welches zumindest ein Detektororgan (20, 21, 62, 138, 166, 176, 196, 230, 304, 364, 380) aufweist oder mit einem solchen in Wirkverbindung steht, wobei das Detektororgan (20, 21, 62, 138, 166, 176, 196, 230, 304, 364, 380) ausgelegt oder einstellbar ist, einen vorbestimmten unzulässigen Betriebszustand der elektrochemischen Sekundärzelle zu erfassen und bei unzulässigem Betriebszustand der elektrochemischen Sekundärzelle mindestens ein Schaltorgan (44, 46, 48, 50, 86, 134, 170, 180, 204, 234, 274, 278, 360, 362, 376, 378) zu betätigen, welches ein Nachladen und/oder Entladen der elektrochemischen Sekundärzelle verhindert, dadurch gekennzeichnet, dass das Gehäuse als hermetisch dichtes Schutzgehäuse (14, 54, 116, 154, 190, 224, 252, 264, 298, 340) ausgebildet ist, welches Teil einer implantierbaren medizinischen Vorrichtung ist.

2. Elektrochemische Sekundärzelle nach Anspruch 1, dadurch gekennzeichnet, dass mindestens ein Schaltorgan als Öffner (48, 170, 180, 204, 234, 274, 360, 362) ausgebildet ist, der ausgelegt oder einstellbar ist, bei einem unzulässigen Betriebszustand der elektrochemischen Sekundärzelle einen Nachladestromkreis (22) elektrisch zu unterbrechen, welcher mittels einer Ladevorrichtung speisbar ist.

3. Elektrochemische Sekundärzelle nach Anspruch 1 oder 2, dadurch gekennzeichnet, dass mindestens ein Schaltorgan als Öffner (50, 170, 180, 204, 234, 274, 360, 362) ausgebildet ist, der ausgelegt oder einstellbar ist, bei einem unzulässigen Betriebszustand der elektrochemischen Sekundärzelle einen mit der elektrochemischen Sekundärzelle elektrisch verbundenen Verbraucherstromkreis (24) elektrisch zu unterbrechen.

4. Elektrochemische Sekundärzelle nach einem der Ansprüche 1 bis 3, dadurch gekennzeichnet, dass mindestens ein Schaltorgan als Schließer (44, 86, 376, 378) ausgebildet ist, der ausgelegt oder einstellbar ist, bei einem unzulässigen Betriebszustand der elektrochemischen Sekundärzelle einen Nachladestromkreis (22) elektrisch kurzzuschließen, welcher mittels einer Ladevorrichtung speisbar ist.

5. Elektrochemische Sekundärzelle nach einem der vorhergehenden Ansprüche, dadurch gekennzeichnet, dass mindestens ein Schaltorgan als Schließer (46, 134, 278) ausgebildet ist, der ausgelegt oder einstellbar ist, bei einem unzulässigen Betriebszustand der elektrochemischen Sekundärzelle diese elektrisch kurzzuschließen.

6. Elektrochemische Sekundärzelle nach einem der vorhergehenden Ansprüche, dadurch gekennzeichnet, dass mindestens ein Schaltorgan (170, 204, 234, 274) ausgelegt oder einstellbar ist, einen Strom in einem Nachlade- und/oder Entladestromkreis (22; 24) der elektrochemischen Sekundärzelle irreversibel zu unterbrechen.

7. Elektrochemische Sekundärzelle nach einem der vorhergehenden Ansprüche, dadurch gekennzeichnet, dass mindestens ein Schaltorgan (86, 180, 360, 362, 376, 378) ausgelegt oder einstellbar ist, einen Strom in einem Nachlade- und/oder Entladestromkreis (22; 24) der elektrochemischen Sekundärzelle reversibel zu unterbrechen.

8. Elektrochemische Sekundärzelle nach einem der vorhergehenden Ansprüche, dadurch gekennzeichnet, dass mindestens eine Überstromsicherung (42) vorgesehen ist, die ausgelegt oder einstellbar ist, einen Strom in einem Nachlade- und/oder einem Verbraucherstromkreis (22; 24) der elektrochemischen Sekundärzelle zu begrenzen.

9. Elektrochemische Sekundärzelle nach einem der vorhergehenden Ansprüche, dadurch gekennzeichnet, dass mindestens eine Überstromsicherung (42, 68, 70, 146) vorgesehen ist, die ausgelegt oder einstellbar ist, einen Strom in einem Nachlade- und/oder einem Verbraucherstromkreis (22; 24) der elektrochemischen Sekundärzelle reversibel oder irreversibel zu unterbrechen.

10. Elektrochemische Sekundärzelle nach einem der vorhergehenden Ansprüche, dadurch gekennzeichnet, dass mindestens ein Detektororgan (21) ausgelegt oder einstellbar ist, die Temperatur der elektrochemischen Sekundärzelle, insbesondere innerhalb des Schutzgehäuses (14), zu erfassen, und bei Erreichen einer unzulässigen Temperatur mindestens ein Schaltorgan (44, 46, 48, 50) zu betätigen.

11. Elektrochemische Sekundärzelle nach einem der vorhergehenden Ansprüche, dadurch gekennzeichnet, dass mindestens ein Detektororgan (20, 62, 138, 166, 176, 196, 230, 304, 364, 380) ausgelegt oder einstellbar ist, den Druck in einem mindestens eine Elektrode (2, 4) aufnehmenden Innenraum des Schutzgehäuses (14, 54, 116, 154, 190, 224, 252, 264, 298, 340) zu erfassen und bei Erreichen eines unzulässigen Drucks mindestens ein Schaltorgan (44, 46, 48, 50, 86, 134, 170, 180, 204, 234, 274, 278, 360, 362, 376, 378) zu betätigen.

12. Elektrochemische Sekundärzelle nach einem der vorhergehenden Ansprüche, dadurch gekennzeichnet, dass mindestens ein Detektororgan (20, 62, 138, 166, 176, 196, 230, 304, 364, 380) dergestalt ausgelegt oder einstellbar ist, dass demselben bei einem unzulässigen Betriebszustand der elektrochemischen Sekundärzelle eine Formänderung aufgeprägt wird, die mindestens ein Schaltorgan (44, 46, 48, 50, 86, 134, 170, 180, 204, 234, 274, 278, 360, 362, 376, 378) betätigt.

13. Elektrochemische Sekundärzelle nach Anspruch 12, dadurch gekennzeichnet, dass mindestens ein Schaltorgan (44, 46, 48, 50, 86, 134, 170, 180, 204, 234, 274, 278, 360, 362, 376, 378) mittels der Formänderung des Detektororgans (20, 62, 138, 166, 176, 196, 230, 304, 364, 380) mechanisch betätigbar ist.

14. Elektrochemische Sekundärzelle nach Anspruch 12 oder 13, dadurch gekennzeichnet, dass mindestens ein Schaltorgan (44, 46, 48, 50) mittels einer die Formänderung des Detektororgans (20, 62, 138, 166, 176, 196, 230, 304) erfassenden Auswerteelektronik (52) betätigbar ist.

15. Elektrochemische Sekundärzelle nach Anspruch 14, gekennzeichnet durch einen elektrischen Dehnungsmesser (292), der die Formänderung des Detektororgans (62) erfasst.

16. Elektrochemische Sekundärzelle nach Anspruch 15, dadurch gekennzeichnet, dass der elektrische Dehnungsmesser als Dehnungsmessstreifen (292) ausgebildet ist.

17. Elektrochemische Sekundärzelle nach Anspruch 15, dadurch gekennzeichnet, dass der elektrische Dehnungsmesser als piezoelektrischer Wandler ausgelegt ist.

18. Elektrochemische Sekundärzelle nach einem der vorhergehenden Ansprüche, dadurch gekennzeichnet, dass mindestens ein Detektororgan (20, 62, 138, 166, 176, 196, 230, 304, 364, 380) Teil des Schutzgehäuses (14, 54, 116, 154, 190, 224, 252, 264, 298, 340) ist.

19. Elektrochemische Sekundärzelle nach einem der vorhergehenden Ansprüche, dadurch gekennzeichnet, dass mindestens ein Detektororgan (21, 138) im Inneren des Schutzgehäuses (14, 116) untergebracht ist.

20. Elektrochemische Sekundärzelle nach einem der vorhergehenden Ansprüche, dadurch gekennzeichnet, dass mindestens ein Detektororgan (364) außerhalb eines die Elektroden (2, 4) aufnehmenden Abschnitts des Schutzgehäuses (340) angeordnet ist und in Fluidverbindung mit dem Inneren des Schutzgehäuses (340) steht.

21. Elektrochemische Sekundärzelle nach einem der vorhergehenden Ansprüche, dadurch gekennzeichnet, dass mindestens ein Detektororgan (62, 138, 166, 176, 196, 230, 304, 364, 380) als wölbbare Membran ausgebildet ist.

22. Elektrochemische Sekundärzelle nach Anspruch 21, dadurch gekennzeichnet, dass die Membran (62, 138, 166, 176, 196, 230, 304, 364, 380) eine Außen- oder Trennwand des hermetisch dichten Schutzgehäuses (54, 116, 154, 190, 224, 252, 264, 298, 340) bildet.

23. Elektrochemische Sekundärzelle nach Anspruch 21 oder 22, gekennzeichnet durch mindestens eine Membran (364, 380), die in eine Seitenwand (342, 346) des hermetisch dichten Schutzgehäuses (340) integriert ist, wobei die Wölbungsrichtung der Membran (364, 380) im Wesentlichen lotrecht zur kleinsten Ausdehnung der Schutzgehäuses (340) verläuft.

24. Elektrochemische Sekundärzelle nach einem der Ansprüche 21 bis 23, dadurch gekennzeichnet, dass mindestens eine Membran (380) als Teil eines Schließers ausgebildet und mittels der Membran (380) bei einem unzulässigen Betriebszustand der elektrochemischen Sekundärzelle ein Kontaktpaar (376, 378) des Schließers elektrisch kurzschließbar ist.

25. Elektrochemische Sekundärzelle nach einem der Ansprüche 21 bis 24, dadurch gekennzeichnet, dass mindestens eine Membran (364) als Teil eines Öffners ausgebildet und mittels der Membran (364) bei einem unzulässigen Betriebszustand der elektrochemischen Sekundärzelle ein Kontaktpaar (360, 362) des Öffners elektrisch außer Eingriff bringbar ist.

26. Elektrochemische Sekundärzelle nach einem der vorhergehenden Ansprüche, dadurch gekennzeichnet, dass das Schutzgehäuse (14, 54, 116, 154, 190, 224, 252, 264, 298, 340) als hermetisch dichter stoffschlüssiger Verbund zwischen wenigstens einem elektrisch leitenden metallischen Gehäuseabschnitt (11, 13, 60, 62, 64, 66, 118, 138, 156, 158, 166, 176, 192, 196, 226, 228, 230, 254, 300, 302, 304, 316, 342, 344, 346) und mindestens einem elektrisch isolierenden anorganisch-nichtmetallischen Gehäuseabschnitt (15, 19, 80, 122, 162, 212, 229, 318, 350, 374) ausgebildet ist.

27. Elektrochemische Sekundärzelle nach Anspruch 26, dadurch gekennzeichnet, dass mindestens ein elektrisch isolierender anorganisch-nichtmetallischer Gehäuseabschnitt (15, 19, 80, 122, 162, 212, 229, 318, 350, 374) in einem keramischen Werkstoff ausgeführt ist.

28. Elektrochemische Sekundärzelle nach Anspruch 26 oder 27, dadurch gekennzeichnet, dass in mindestens einem elektrisch isolierenden anorganisch-nichtmetallischen Gehäuseabschnitt (19, 212, 318, 350) eine mindestens einpolige elektrisch leitende Durchführung (214, 260, 315, 348) hermetisch dicht und elektrisch isoliert aufgenommen ist.

29. Elektrochemische Sekundärzelle nach Anspruch 28, dadurch gekennzeichnet, dass mindestens ein Pol der hermetisch dichten Durchführung (214, 260, 315, 348) einen metallischen Kontaktstift (322, 324, 354, 356) aufweist, der den elektrisch isolierenden anorganisch-nichtmetallischen Gehäuseabschnitt (212, 318, 350) hermetisch dicht durchsetzt.

30. Elektrochemische Sekundärzelle nach Anspruch 29, dadurch gekennzeichnet, dass die Kontaktstifte (354, 356) in dem elektrisch isolierenden anorganisch-nichtmetallischen Gehäuseabschnitt (350) und dieser in einer Außenwand (344) des Schutzgehäuses (340) hermetisch dicht mittels einer stoffschlüssigen Verbindung aufgenommen sind.

31. Elektrochemischen Sekundärzelle nach Anspruch 29, dadurch gekennzeichnet, dass die Kontaktstifte (322, 324) in dem elektrisch isolierenden anorganisch-nichtmetallischen Gehäuseabschnitt (318) und dieser in einer metallischen Aufnahme (316) hermetisch dicht mittels einer stoffschlüssigen Verbindung aufgenommen sind, wobei die metallische Aufnahme (316) mit einer Außenwand (300) des Schutzgehäuses (298) ebenfalls stoffschlüssig verbunden ist.

32. Elektrochemische Sekundärzelle nach einem der Ansprüche 26 bis 31, dadurch gekennzeichnet, dass mindestens ein elektrisch leitender metallischer Gehäuseabschnitt (11, 13, 60, 64, 118, 138, 156, 166, 176, 192, 226, 228, 254, 316) mit einer Elektrode (2, 4) elektrisch kontaktiert ist.

33. Elektrochemische Sekundärzelle nach einem der Ansprüche 28 bis 32, dadurch gekennzeichnet, dass mindestens ein Pol der hermetisch dichten Durchführung (214, 260, 315, 348) mit einer Elektrode (2, 4) elektrisch kontaktiert ist.

34. Elektrochemische Sekundärzelle nach einem der vorhergehenden Ansprüche, gekennzeichnet durch ein Schutzgehäuse (14, 54, 116, 154, 190, 224, 252, 264, 298, 340), welches so dimensioniert ist, dass seine hermetische Dichtheit erhalten bleibt, selbst wenn bei einem unzulässigen Betriebszustand der elektrochemischen Sekundärzelle diese weiterhin nachladbar oder entladbar ist.

35. Elektrochemische Sekundärzelle nach einem der vorhergehenden Ansprüche, dadurch gekennzeichnet, dass eine Außenseite des Schutzgehäuses (116) als Ganzes biokompatibel ausgestaltet ist.
